# EUROPEAN PATENT SPECIFICATION

(11) **EP 3 997 807 B1**
(45) Date of publication and mention of the grant of the patent: **24.01.2024**
(21) Application number: 20750554.6
(22) Date of filing: 10.07.2020
(51) Int. Cl.: H04B 7/155, H04W 88/04, G06F 1/20, H04B 7/06

(54) **MONITORED CONDITION RESPONSE IN A WIRELESS COMMUNICATION DEVICE VIA ONE OR MORE RELAY DEVICES**
ÜBERWACHTE ZUSTANDSREAKTION IN EINER DRAHTLOSEN KOMMUNIKATIONSVORRICHTUNG ÜBER EINE ODER MEHRERE RELAISVORRICHTUNGEN
RÉPONSE CONDITIONNELLE SURVEILLÉE DANS UN DISPOSITIF DE COMMUNICATION SANS FIL PAR L'INTERMÉDIAIRE D'UN OU PLUSIEURS DISPOSITIFS RELAIS

(30) Priority: 12.07.2019 US 201962873473 P; 09.07.2020 US 202016925078
(43) Date of publication of application: 18.05.2022
(73) Proprietor: QUALCOMM Incorporated, San Diego, CA 92121-1714 (US)
(72) Inventor: RAGHAVAN, Vasanthan, San Diego, California 92121-1714 (US); BAI, Tianyang, San Diego, California 92121-1714 (US); RYU, Jung Ho, San Diego, California 92121-1714 (US); WANG, Hua, San Diego, California 92121-1714 (US); LI, Junyi, San Diego, California 92121-1714 (US)
(74) Representative: Tomkins & Co
(86) International application number: PCT/US2020/041516
(87) International publication number: WO 2021/011339

(56) References cited:
- US-A1- 2018 278 309
- US-A1- 2019 141 692
- NOKIA ET AL: "UE initiated path switch", 3GPP DRAFT; R2-1713411 UE INITIATED PATH SWITCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20171127 - 20171201 17 November 2017 (2017-11-17), XP051372143, Retrieved from the Internet: URL:http://www.3gpp.org/ftp/tsg%5Fran/WG2% 5FRL2/TSGR2%5F100/Docs/ [retrieved on 2017-11-17]

## Description

### BACKGROUND

The following relates generally to wireless communications, and more specifically to methods for responding to one or more monitored conditions at a wireless communication device by communicating via one or more other wireless communication devices configured to operate as relay devices.

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include a number of base stations or network access nodes, each simultaneously supporting communication for multiple communication devices, which may be otherwise known as user equipment (UE).

In some wireless communications systems, beamforming techniques may be used. With beamforming, rather than broadcasting a signal omnidirectionally in all directions, a base station or network access node may identify an optimal route to a LTE and focus a signal in a directionally-concentrated manner (e.g., via a beam) toward a UE. However, in some cases, beamforming techniques may result in or be subject to various thermal, exposure, and/or other like conditions. For example, use of a specific beam may give rise to a thermal condition within a UE, or an exposure condition associated with an individual using the UE. Improved beamforming techniques may better mitigate against thermal or exposure conditions.

United States Patent Application Publication No. US 2018/278309 relates to methods for beam switching in millimeter wave systems to manage thermal constraints. United States Patent Application Publication No. US 2019/0141692 relates to techniques and apparatuses for beam management to overcome Maximum Permissible Exposure conditions. 3GPP Draft R2-1713411, "UE initiated path switch", Nokia et al, discusses path switch options.

### SUMMARY

The invention is defined by the subject-matter of the independent claims. Preferred embodiments are defined in the dependent claims. The described techniques relate to improved methods, systems, devices, and apparatuses that support methods for thermal and maximum permissible exposure (MPE) mitigation of a wireless communication device. Generally, the described techniques provide for a first user equipment (UE) to mitigate thermal overload and MPE overexposure conditions on a main communication link between the first UE and a base station by establishing a relay communication link between the first UE and a second UE. The relay communication link is used by the first UE to communicate with the base station while the thermal or exposure condition associated with the main communication link is reduced.

A method of wireless communications by a first LTE is described. The method may include monitoring, via one or more sensors of the first UE, at least one of a thermal overload condition or an exposure condition associated with a first communication link between the first UE and a base station, determining, based on the monitoring, that at least one of the thermal overload condition or the exposure condition exceeds a corresponding predetermined switch threshold, establishing, based on the determining, a second communication link between the first UE and a second UE, where the second UE is configured to operate as a relay UE, for communications between the first LTE and the base station via the second communication link, and communicating with the base station via the second communication link based on the determining.

An apparatus for wireless communications by a first UE is described. The apparatus may include a processor, memory coupled with the processor, and instructions stored in the memory. The instructions may be executable by the processor to cause the apparatus to monitor, via one or more sensors of the first UE, at least one of a thermal overload condition or an exposure condition associated with a first communication link between the first UE and a base station, determine, based on the monitoring, that at least one of the thermal overload condition or the exposure condition exceeds a corresponding predetermined switch threshold, establish, based on the determining, a second communication link between the first UE and a second UE, where the second UE is configured to operate as a relay UE, for communications between the first UE and the base station via the second communication link, and communicate with the base station via the second communication link based on the determining.

Another apparatus for wireless communications by a first UE is described. The apparatus may include means for monitoring, via one or more sensors of the first UE, at least one of a thermal overload condition or an exposure condition associated with a first communication link between the first UE and a base station, determining, based on the monitoring, that at least one of the thermal overload condition or the exposure condition exceeds a corresponding predetermined switch threshold, establishing, based on the determining, a second communication link between the first UE and a second UE, where the second UE is configured to operate as a relay UE, for communications between the first UE and the base station via the second communication link, and communicating with the base station via the second communication link based on the determining.

A non-transitory computer-readable medium storing code for wireless communications by a first UE is described. The code may include instructions executable by a processor to monitor, via one or more sensors of the first UE, at least one of a thermal overload condition or an exposure condition associated with a first communication link between the first UE and a base station, determine, based on the monitoring, that at least one of the thermal overload condition or the exposure condition exceeds a corresponding predetermined switch threshold, establish, based on the determining, a second communication link between the first UE and a second UE, where the second UE is configured to operate as a relay UE, for communications between the first UE and the base station via the second communication link, and communicate with the base station via the second communication link based on the determining.

In some examples, the first communication link, the second communication link, or both the first communication link and the second communication link include millimeter wave carrier frequencies. Some examples of the method, apparatuses, and non-transitory computer-readable medium described herein may further include operations, features, means, or instructions for transmitting a data forwarding request to the base station via the first communication link, where the data forwarding request may be a trigger for the base station to use the second UE as the relay UE for communications between the base station and the first UE.

Some examples of the method, apparatuses, and non-transitory computer-readable medium described herein may further include operations, features, means, or instructions for transmitting a need assistance request to the second UE via the second communication link, where the need assistance request may be a trigger for the second UE to be the relay UE for communications between the first UE and the base station.

Some examples of the method, apparatuses, and non-transitory computer-readable medium described herein may further include operations, features, means, or instructions for selecting the second UE from a list of available UEs identified in a database, and transmitting an identifier of the second UE to the base station via the first communication link.

Some examples of the method, apparatuses, and non-transitory computer-readable medium described herein may further include operations, features, means, or instructions for selecting the second UE from the list of available UEs may be based on at least one of a location of the second UE, a proximity of the second UE, an antenna module and associated radio frequency integrated circuitry used to control the antenna module by the first UE for the second communication link, a direction of a relay link or a beam-related information associated with establishing the second communication link, a data size of a payload to communicate via the second UE, a priority associated with the payload, a link budget associated with the second UE, or combinations thereof.

Some examples of the method, apparatuses, and non-transitory computer-readable medium described herein may further include operations, features, means, or instructions for establishing a third communication link between the first UE and a third UE, where the third UE may be configured to operate as a second relay UE for communications between the first UE and the base station via the third communication link, and switching to the third communication link for communications between the first UE and the base station.

Some examples of the method, apparatuses, and non-transitory computer-readable medium described herein may further include operations, features, means, or instructions for switching back to the first communication link or the second communication link from the third communication link.

Some examples of the method, apparatuses, and non-transitory computer-readable medium described herein may further include operations, features, means, or instructions for continuing to monitor at least one of the thermal overload condition or the exposure condition after establishing the second communication link, determining, based at least on the continued monitoring, that the thermal overload condition or the exposure condition that exceeded the predetermined switch threshold may have reduced and may be lower than a predetermined operation threshold, and switching back to the first communication link based on the thermal overload condition or the exposure condition that exceeded the predetermined switch threshold being lower than the predetermined operation threshold.

In some examples of the method, apparatuses, and non-transitory computer-readable medium described herein, the one or more sensors include at least one thermal sensor configured to measure at least one of a UE skin temperature, a core temperature of a user device, a temperature of an antenna module associated with the first communication link, a temperature of a radio frequency integrated circuit associated with the antenna module used to establish the first communication link, or combinations thereof.

In some examples of the method, apparatuses, and non-transitory computer-readable medium described herein, the one or more sensors include at least one exposure sensor configured to measure radio frequency radiation exposure via at least one of local averaging, spatial averaging, temporal averaging, or combinations thereof.

In some examples of the method, apparatuses, and non-transitory computer-readable medium described herein, the first UE uses a first antenna module for the first communication link and uses a second antenna module different from the first antenna module for the second communication link.

In some examples of the method, apparatuses, and non-transitory computer-readable medium described herein, the communications between the first UE and the base station via the second communication link may be security- or privacy-encoded.

A method of wireless communications by a base station is described. The method may include establishing a first communication link with a first UE, establishing a second communication link with a second UE, and receiving a message from the first UE that communications between the first UE and the base station are to be relayed by the second UE via the second communication link, the message being based on a thermal overload condition or an exposure condition associated with the first communication link.

An apparatus for wireless communications by a base station is described. The apparatus may include a processor, memory coupled with the processor, and instructions stored in the memory. The instructions may be executable by the processor to cause the apparatus to establish a first communication link with a first UE, establish a second communication link with a second UE, and receive a message from the first UE that communications between the first UE and the base station are to be relayed by the second UE via the second communication link, the message being based on a thermal overload condition or an exposure condition associated with the first communication link.

Another apparatus for wireless communications by a base station is described. The apparatus may include means for establishing a first communication link with a first UE, establishing a second communication link with a second UE, and receiving a message from the first UE that communications between the first UE and the base station are to be relayed by the second UE via the second communication link, the message being based on a thermal overload condition or an exposure condition associated with the first communication link.

A non-transitory computer-readable medium storing code for wireless communications by a base station is described. The code may include instructions executable by a processor to establish a first communication link with a first UE, establish a second communication link with a second UE, and receive a message from the first UE that communications between the first UE and the base station are to be relayed by the second UE via the second communication link, the message being based on a thermal overload condition or an exposure condition associated with the first communication link.

In some examples, the first communication link, the second communication link, or both the first communication link and the second communication link include millimeter wave carrier frequencies. Some examples of the method, apparatuses, and non-transitory computer-readable medium described herein may further include operations, features, means, or instructions for receiving a data forwarding request generated by the first UE, where the data forwarding request may be a trigger for the base station to use the second UE as a relay UE for communications between the base station and the first UE, and where the first communication link, the second communication link, or both the first communication link and the second communication link may include millimeter wave carrier frequencies.

Some examples of the method, apparatuses, and non-transitory computer-readable medium described herein may further include operations, features, means, or instructions for establishing a third communication link with a third UE, and receiving a message from the first UE that communications between the first UE and the base station may be to be relayed by the third UE via the third communication link.

Some examples of the method, apparatuses, and non-transitory computer-readable medium described herein may further include operations, features, means, or instructions for receiving, from the first UE via the first communication link or the second communication link, an identifier of the second UE.

A method of wireless communications by a UE operating as a relay UE is described. The method may include establishing a first communication link with a base station, establishing a second communication link with a second UE, the second communication link being established based on a thermal overload condition or an exposure condition associated with a third communication link between the second UE and the base station, and relaying, over the first communication link and the second communication link, data between the second UE and the base station.

An apparatus for wireless communications by a UE operating as a relay UE is described. The apparatus may include a processor, memory coupled with the processor, and instructions stored in the memory. The instructions may be executable by the processor to cause the apparatus to establish a first communication link with a base station, establish a second communication link with a second UE, the second communication link being established based on a thermal overload condition or an exposure condition associated with a third communication link between the second UE and the base station, and relay, over the first communication link and the second communication link, data between the second UE and the base station.

Another apparatus for wireless communications by a UE operating as a relay UE is described. The apparatus may include means for establishing a first communication link with a base station, establishing a second communication link with a second UE, the second communication link being established based on a thermal overload condition or an exposure condition associated with a third communication link between the second UE and the base station, and relaying, over the first communication link and the second communication link, data between the second UE and the base station.

A non-transitory computer-readable medium storing code for wireless communications by a UE operating as a relay UE is described. The code may include instructions executable by a processor to establish a first communication link with a base station, establish a second communication link with a second UE, the second communication link being established based on a thermal overload condition or an exposure condition associated with a third communication link between the second UE and the base station, and relay, over the first communication link and the second communication link, data between the second UE and the base station.

In some examples, at least one of the first communication link, the second communication link, or the third communication link may include millimeter wave carrier frequencies. Some examples of the method, apparatuses, and non-transitory computer-readable medium described herein may further include operations, features, means, or instructions for receiving a need assistance request from the second UE via the second communication link, where the need assistance request may be a trigger for the relay UE to relay communications between the second UE and the base station.

Some examples of the method, apparatuses, and non-transitory computer-readable medium described herein may further include operations, features, means, or instructions for receiving an identifier request from the second UE, and sending an identifier of the relay UE to the second UE based on the identifier request.

Some examples of the method, apparatuses, and non-transitory computer-readable medium described herein may further include operations, features, means, or instructions for relaying, via the first communication link and the second communication link, a message from the second UE to the base station, the message including an identifier of the relay UE.

In some examples, the first communication link, the second communication link, or both the first communication link and the second communication link include millimeter wave carrier frequencies. Some examples of the method, apparatuses, and non-transitory computer-readable medium described herein may further include operations, features, means, or instructions for relaying, to the base station via the first communication link and the second communication link, a data forwarding request generated by the second UE, where the data forwarding request may be a trigger for the base station to relay communications between the base station and the second UE via the relay UE.

### BRIEF DESCRIPTION OF THE DRAWINGS

FIG. 1 illustrates an example of a system for wireless communications configured to be responsive to one or more monitored conditions at a wireless communication device, in accordance with aspects of the present disclosure.
FIG. 2 illustrates an example of a system for wireless communications configured to be responsive to one or more monitored conditions at a wireless communication device, in accordance with aspects of the present disclosure.
FIG. 3 illustrates an example of a system for wireless communications configured to be responsive to one or more monitored conditions at a wireless communication device, in accordance with aspects of the present disclosure.
FIG. 4 illustrates an example of a system for wireless communications configured to be responsive to one or more monitored conditions at a wireless communication device, in accordance with aspects of the present disclosure.
FIG. 5 illustrates an example of a data flow diagram for methods responsive to one or more monitored conditions at a wireless communication device, in accordance with aspects of the present disclosure.
FIGs. 6 and 7 show block diagrams of devices responsive to one or more monitored conditions at a wireless communication device, in accordance with aspects of the present disclosure.
FIG. 8 shows a block diagram of a communications manager configured to be responsive to one or more monitored conditions at a wireless communication device, in accordance with aspects of the present disclosure.
FIG. 9 shows a diagram of a system including a device configured to be responsive to one or more monitored conditions at a wireless communication device, in accordance with aspects of the present disclosure.
FIGs. 10 and 11 show block diagrams of devices configured to be responsive to one or more monitored conditions at a wireless communication device, in accordance with aspects of the present disclosure.
FIG. 12 shows a block diagram of a communications manager configured to be responsive to one or more monitored conditions at of a wireless communication device, in accordance with aspects of the present disclosure.
FIG. 13 shows a diagram of a system including a device that configured to be responsive to one or more monitored conditions at a wireless communication device, in accordance with aspects of the present disclosure.
FIGs. 14 through 16 show flowcharts illustrating methods responsive to one or more monitored conditions at a wireless communication device, in accordance with aspects of the present disclosure.

### DETAILED DESCRIPTION

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 may be referred to (interchangeably) as a "Sub-6 GHz" band. A similar nomenclature issue sometimes occurs with regard to FR2, which may be referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band.

In some cases, a user equipment (UE) may be configured to operate within thermal and maximum permissible exposure (MPE) constraints. For example, in some cases, radiated power levels (e.g., Effective Isotropic Radiated Power (EIRP) levels) may be limited to a specific MPE value or condition designated, for example, by regulatory entities (e.g., Federal Communications Commission (FCC), International Commission on Non-Ionizing Radiation Protection (ICNIRP), etc.). In some cases, permissible radiated power levels may be limited to ensure a user's sensitive skin tissue is protected against potential damage from overexposure.

In some cases, thermal and MPE constraints may be addressed with thermal or MPE mitigation strategies. However, conventional thermal or MPE mitigation strategies may lead to a reduced quality of service (e.g., reduced bandwidth, increased latency, etc.). For example, one thermal mitigation strategy may include turning off a transmit chain until the internal UE radio frequency components sufficiently cool down. In another example, an MPE mitigation strategy may also involve turning off a transmit chain if biological tissue is identified to be proximal to a UE antenna for a sufficiently long period of time. In both examples, the mitigation techniques may result in reduced quality of service due to the UE components being turned off (or otherwise placed in a sleep or low-power mode). To avoid the problems with conventional strategies, relay communication link techniques may be used to avoid a reduction in quality of service that are caused by the conventional thermal and MPE exposure mitigation strategies. In one example, the present techniques may use millimeter wave relay communication links to avoid the problems with conventional strategies. In one example, a UE may use one or more sensors to monitor thermal and exposure conditions associated with a main communication link between the UE and a base station. When the UE detects a thermal or exposure overload condition, the UE may switch from the main communication link to a relay communication link between the UE and a UE configured to operates as a relay UE, enabling the UE to continue communications between the UE and the base station via the relay communication link. The relay communication link may utilize different components (a different transmit chain, for example) than those used with the main communication link and subject to the thermal or exposure overload condition.

Aspects of the disclosure are initially described in the context of various examples of wireless communications systems and devices configured to be responsive to one or more monitored conditions, such as, for example, thermal conditions, MPE conditions, or other like conditions that may be monitored (e.g., sensed, measured, estimated, etc.) at a wireless communication device (e.g., a UE). Aspects of the disclosure are further illustrated by and described with reference to apparatus diagrams, system diagrams, and flowcharts that relate to methods for one or both thermal and MPE mitigation of a wireless communication device, by way of example but not limitation.

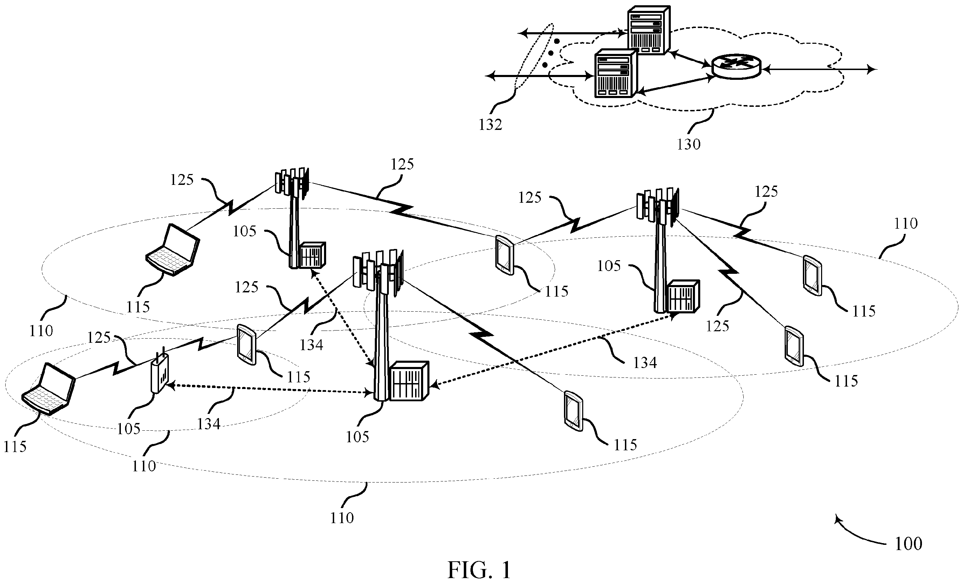

**FIG. 1** illustrates an example of a wireless communications system 100 that supports methods for thermal and MPE mitigation of a wireless communication device in accordance with aspects of the present disclosure. The wireless communications system 100 includes base stations 105, UEs 115, and a core network 130. In some examples, the wireless communications system 100 may be a Long Term Evolution (LTE) network, an LTE-Advanced (LTE-A) network, an LTE-A Pro network, or a New Radio (NR) network. In some cases, wireless communications system 100 may support enhanced broadband communications, ultra-reliable (e.g., mission critical) communications, low latency communications, or communications with low-cost and low-complexity devices.

Base stations 105 may wirelessly communicate with UEs 115 via one or more base station antennas. Base stations 105 described herein may include or may be referred to by those skilled in the art as a base transceiver station, a radio base station, an access point, a radio transceiver, a NodeB, an eNodeB (eNB), a next-generation NodeB or giga-NodeB (either of which may be referred to as a gNB), a Home NodeB, a Home eNodeB, or some other suitable terminology. Wireless communications system 100 may include base stations 105 of different types (e.g., macro or small cell base stations). The UEs 115 described herein may be able to communicate with various types of base stations 105 and network equipment including macro eNBs, small cell eNBs, gNBs, relay base stations, and the like.

Each base station 105 may be associated with a particular geographic coverage area 110 in which communications with various UEs 115 is supported. Each base station 105 may provide communication coverage for a respective geographic coverage area 110 via communication links 125, and communication links 125 between a base station 105 and a UE 115 may utilize one or more carriers. Communication links 125 shown in wireless communications system 100 may include uplink transmissions from a UE 115 to a base station 105, or downlink transmissions from a base station 105 to a UE 115. Downlink transmissions may also be called forward link transmissions while uplink transmissions may also be called reverse link transmissions.

The geographic coverage area 110 for a base station 105 may be divided into sectors making up a portion of the geographic coverage area 110, and each sector may be associated with a cell. For example, each base station 105 may provide communication coverage for a macro cell, a small cell, a hot spot, or other types of cells, or various combinations thereof. In some examples, a base station 105 may be movable and therefore provide communication coverage for a moving geographic coverage area 110. In some examples, different geographic coverage areas 110 associated with different technologies may overlap, and overlapping geographic coverage areas 110 associated with different technologies may be supported by the same base station 105 or by different base stations 105. The wireless communications system 100 may include, for example, a heterogeneous LTE/LTE-A/LTE-A Pro or NR network in which different types of base stations 105 provide coverage for various geographic coverage areas 110.

The term "cell" refers to a logical communication entity used for communication with a base station 105 (e.g., over a carrier), and may be associated with an identifier for distinguishing neighboring cells (e.g., a physical cell identifier (PCID), a virtual cell identifier (VCID)) operating via the same or a different carrier. In some examples, a carrier may support multiple cells, and different cells may be configured according to different protocol types (e.g., machine-type communication (MTC), narrowband Internet-of-Things (NB-IoT), enhanced mobile broadband (eMBB), or others) that may provide access for different types of devices. In some cases, the term "cell" may refer to a portion of a geographic coverage area 110 (e.g., a sector) over which the logical entity operates.

UEs 115 may be dispersed throughout the wireless communications system 100, and each UE 115 may be stationary or mobile. A UE 115 may also be referred to as a mobile device, a wireless device, a remote device, a handheld device, or a subscriber device, or some other suitable terminology, where the "device" may also be referred to as a unit, a station, a terminal, or a client. A UE 115 may also be a personal electronic device such as a cellular phone, a personal digital assistant (PDA), a tablet computer, a laptop computer, or a personal computer. In some examples, a UE 115 may also refer to a wireless local loop (WLL) station, an Internet of Things (IoT) device, an Internet of Everything (IoE) device, or an MTC device, or the like, which may be implemented in various articles such as appliances, vehicles, meters, or the like.

Some UEs 115, such as MTC or IoT devices, may be low cost or low complexity devices, and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay that information to a central server or application program that can make use of the information or present the information to humans interacting with the program or application. Some UEs 115 may be designed to collect information or enable automated behavior of machines. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for UEs 115 include entering a power saving "deep sleep" mode when not engaging in active communications, or operating over a limited bandwidth (e.g., according to narrowband communications). In some cases, UEs 115 may be designed to support critical functions (e.g., mission critical functions), and a wireless communications system 100 may be configured to provide ultra-reliable communications for these functions.

In some cases, a UE 115 may also be able to communicate directly with other UEs 115 (e.g., using a peer-to-peer (P2P) or device-to-device (D2D) protocol). One or more of a group of UEs 115 utilizing D2D communications may be within the geographic coverage area 110 of a base station 105. Other UEs 115 in such a group may be outside the geographic coverage area 110 of a base station 105, or be otherwise unable to receive transmissions from a base station 105. In some cases, groups of UEs 115 communicating via D2D communications may utilize a one-to-many (1:M) system in which each UE 115 transmits to every other UE 115 in the group. In some cases, a base station 105 facilitates the scheduling of resources for D2D communications. In other cases, D2D communications are carried out between UEs 115 without the involvement of a base station 105.

Base stations 105 may communicate with the core network 130 and with one another. For example, base stations 105 may interface with the core network 130 through backhaul links 132 (e.g., via an S1, N2, N3, or other interface). Base stations 105 may communicate with one another over backhaul links 134 (e.g., via an X2, Xn, or other interface) either directly (e.g., directly between base stations 105) or indirectly (e.g., via core network 130).

The core network 130 may provide user authentication, access authorization, tracking, Internet Protocol (IP) connectivity, and other access, routing, or mobility functions. The core network 130 may be an evolved packet core (EPC), which may include at least one mobility management entity (MME), at least one serving gateway (S-GW), and at least one Packet Data Network (PDN) gateway (P-GW). The MME may manage non-access stratum (e.g., control plane) functions such as mobility, authentication, and bearer management for UEs 115 served by base stations 105 associated with the EPC. User IP packets may be transferred through the S-GW, which itself may be connected to the P-GW. The P-GW may provide IP address allocation as well as other functions. The P-GW may be connected to the network operators IP services. The operators IP services may include access to the Internet, Intranet(s), an IP Multimedia Subsystem (IMS), or a Packet-Switched (PS) Streaming Service.

At least some of the network devices, such as a base station 105, may include subcomponents such as an access network entity, which may be an example of an access node controller (ANC). Each access network entity may communicate with UEs 115 through a number of other access network transmission entities, which may be referred to as a radio head, a smart radio head, or a transmission/reception point (TRP). In some configurations, various functions of each access network entity or base station 105 may be distributed across various network devices (e.g., radio heads and access network controllers) or consolidated into a single network device (e.g., a base station 105).

Wireless communications system 100 may, for example, operate using one or more frequency bands, some of which may include sub-6GHz frequency bands or millimeter wave frequency bands. In some cases, wireless communications system 100 may utilize both licensed and unlicensed radio frequency spectrum bands. For example, wireless communications system 100 may employ License Assisted Access (LAA), LTE-Unlicensed (LTE-U) radio access technology, or NR technology in an unlicensed band such as a 5 GHz ISM band or the like. When operating in unlicensed radio frequency spectrum bands, wireless devices such as base stations 105 and UEs 115 may employ listen-before-talk (LBT) procedures to ensure a frequency channel is clear before transmitting data. In some cases, operations in unlicensed bands may be based on a carrier aggregation configuration in conjunction with component carriers operating in a licensed band (e.g., LAA). Operations in unlicensed spectrum may include downlink transmissions, uplink transmissions, peer-to-peer transmissions, or a combination of these. Duplexing in unlicensed spectrum may be based on frequency division duplexing (FDD), time division duplexing (TDD), or a combination of both.

In some examples, base station 105 or UE 115 may be equipped with multiple antennas, which may be used to employ techniques such as transmit diversity, receive diversity, multiple-input multiple-output (MIMO) communications, or beamforming. For example, wireless communications system 100 may use a transmission scheme between a transmitting device (e.g., a base station 105) and a receiving device (e.g., a UE 115), where the transmitting device is equipped with multiple antennas and the receiving device is equipped with one or more antennas. MIMO communications may employ multipath signal propagation to increase the spectral efficiency by transmitting or receiving multiple signals via different spatial layers, which may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream, and may carry bits associated with the same data stream (e.g., the same codeword) or different data streams. Different spatial layers may be associated with different antenna ports used for channel measurement and reporting. MIMO techniques include single-user MIMO (SU-MIMO) where multiple spatial layers are transmitted to the same receiving device, and multiple-user MIMO (MU-MIMO) where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105 or a UE 115) to shape or steer an antenna beam (e.g., a transmit beam or receive beam) along a spatial path between the transmitting device and the receiving device. Beamforming may be achieved by combining the signals communicated via antenna elements of an antenna array such that signals propagating at particular orientations with respect to an antenna array experience constructive interference while others experience destructive interference. The adjustment of signals communicated via the antenna elements may include a transmitting device or a receiving device applying amplitude and phase offsets to signals carried via each of the antenna elements associated with the device. The adjustments associated with each of the antenna elements may be defined by a beamforming weight set associated with a particular orientation (e.g., with respect to the antenna array of the transmitting device or receiving device, or with respect to some other orientation).

In one example, a base station 105 may use multiple antennas or antenna arrays to conduct beamforming operations for directional communications with a UE 115. For instance, some signals (e.g., synchronization signals, reference signals, beam selection signals, or other control signals) may be transmitted by a base station 105 multiple times in different directions, which may include a signal being transmitted according to different beamforming weight sets associated with different directions of transmission. Transmissions in different beam directions may be used to identify (e.g., by the base station 105 or a receiving device, such as a UE 115) a beam direction for subsequent transmission and/or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based at least in in part on a signal that was transmitted in different beam directions. For example, a UE 115 may receive one or more of the signals transmitted by the base station 105 in different directions, and the UE 115 may report to the base station 105 an indication of the signal it received with a highest signal quality, or an otherwise acceptable signal quality. Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115), or transmitting a signal in a single direction (e.g., for transmitting data to a receiving device).

A receiving device (e.g., a UE 115, which may be an example of a mmW receiving device) may try multiple receive beams when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets applied to signals received at a plurality of antenna elements of an antenna array, or by processing received signals according to different receive beamforming weight sets applied to signals received at a plurality of antenna elements of an antenna array, any of which may be referred to as "listening" according to different receive beams or receive directions. In some examples, a receiving device may use a single receive beam to receive along a single beam direction (e.g., when receiving a data signal). The single receive beam may be aligned in a beam direction determined based at least in part on listening according to different receive beam directions (e.g., a beam direction determined to have a highest signal strength, highest signal-to-noise ratio, or otherwise acceptable signal quality based at least in part on listening according to multiple beam directions).

In some cases, the antennas of a base station 105 or UE 115 may be located within one or more antenna arrays, which may support MIMO operations, or transmit or receive beamforming. For example, one or more base station antennas or antenna arrays may be co-located at an antenna assembly, such as an antenna tower. In some cases, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations.

In some cases, wireless communications system 100 may be a packet-based network that operate according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use hybrid automatic repeat request (HARQ) to provide retransmission at the MAC layer to improve link efficiency. In the control plane, the Radio Resource Control (RRC) protocol layer may provide establishment, configuration, and maintenance of an RRC connection between a UE 115 and a base station 105 or core network 130 supporting radio bearers for user plane data. At the Physical layer, transport channels may be mapped to physical channels.

In some cases, UEs 115 and base stations 105 may support retransmissions of data to increase the likelihood that data is received successfully. HARQ feedback is one technique of increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., signal-to-noise conditions). In some cases, a wireless device may support same-slot HARQ feedback, where the device may provide HARQ feedback in a specific slot for data received in a previous symbol in the slot. In other cases, the device may provide HARQ feedback in a subsequent slot, or according to some other time interval.

Time intervals in LTE or NR may be expressed in multiples of a basic time unit, which may, for example, refer to a sampling period of Tₛ = 1/30,720,000 seconds. Time intervals of a communications resource may be organized according to radio frames each having a duration of 10 milliseconds (ms), where the frame period may be expressed as T_{f} = 307,200 Tₛ. The radio frames may be identified by a system frame number (SFN) ranging from 0 to 1023. Each frame may include 10 subframes numbered from 0 to 9, and each subframe may have a duration of 1 ms. A subframe may be further divided into 2 slots each having a duration of 0.5 ms, and each slot may contain 6 or 7 modulation symbol periods (e.g., depending on the length of the cyclic prefix prepended to each symbol period). Excluding the cyclic prefix, each symbol period may contain 2048 sampling periods. In some cases, a subframe may be the smallest scheduling unit of the wireless communications system 100, and may be referred to as a transmission time interval (TTI). In other cases, a smallest scheduling unit of the wireless communications system 100 may be shorter than a subframe or may be dynamically selected (e.g., in bursts of shortened TTIs (sTTIs) or in selected component carriers using sTTIs).

In some wireless communications systems, a slot may further be divided into multiple mini-slots containing one or more symbols. In some instances, a symbol of a mini-slot or a mini-slot may be the smallest unit of scheduling. Each symbol may vary in duration depending on the subcarrier spacing or frequency band of operation, for example. Further, some wireless communications systems may implement slot aggregation in which multiple slots or mini-slots are aggregated together and used for communication between a UE 115 and a base station 105.

The term "carrier" refers to a set of radio frequency spectrum resources having a defined physical layer structure for supporting communications over a communication link 125. For example, a carrier of a communication link 125 may include a portion of a radio frequency spectrum band that is operated according to physical layer channels for a given radio access technology. Each physical layer channel may carry user data, control information, or other signaling. A carrier may be associated with a pre-defined frequency channel (e.g., an evolved universal mobile telecommunication system terrestrial radio access (E-UTRA) absolute radio frequency channel number (EARFCN)), and may be positioned according to a channel raster for discovery by UEs 115. Carriers may be downlink or uplink (e.g., in an FDD mode), or be configured to carry downlink and uplink communications (e.g., in a TDD mode). In some examples, signal waveforms transmitted over a carrier may be made up of multiple sub-carriers (e.g., using multi-carrier modulation (MCM) techniques such as orthogonal frequency division multiplexing (OFDM) or discrete Fourier transform spread OFDM (DFT-S-OFDM)).

The organizational structure of the carriers may be different for different radio access technologies (e.g., LTE, LTE-A, LTE-A Pro, NR). For example, communications over a carrier may be organized according to TTIs or slots, each of which may include user data as well as control information or signaling to support decoding the user data. A carrier may also include dedicated acquisition signaling (e.g., synchronization signals or system information, etc.) and control signaling that coordinates operation for the carrier. In some examples, (e.g., in a carrier aggregation configuration), a carrier may also have acquisition signaling or control signaling that coordinates operations for other carriers.

Physical channels may be multiplexed on a carrier according to various techniques. A physical control channel and a physical data channel may be multiplexed on a downlink carrier, for example, using time division multiplexing (TDM) techniques, frequency division multiplexing (FDM) techniques, or hybrid TDM-FDM techniques. In some examples, control information transmitted in a physical control channel may be distributed between different control regions in a cascaded manner (e.g., between a common control region or common search space and one or more UE-specific control regions or UE-specific search spaces).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of predetermined bandwidths for carriers of a particular radio access technology (e.g., 1.4, 3, 5, 10, 15, 20, 40, or 80 MHz). In some examples, each served UE 115 may be configured for operating over portions or all of the carrier bandwidth. In other examples, some UEs 115 may be configured for operation using a narrowband protocol type that is associated with a predefined portion or range (e.g., set of subcarriers or RBs) within a carrier (e.g., "in-band" deployment of a narrowband protocol type).

In a system employing MCM techniques, a resource element may include one symbol period (e.g., a duration of one modulation symbol) and one subcarrier, where the symbol period and subcarrier spacing are inversely related. The number of bits carried by each resource element may depend on the modulation scheme (e.g., the order of the modulation scheme). Thus, the more resource elements that a UE 115 receives and the higher the order of the modulation scheme, the higher the data rate may be for the UE 115. In MIMO systems, a wireless communications resource may refer to a combination of a radio frequency spectrum resource, a time resource, and a spatial resource (e.g., spatial layers), and the use of multiple spatial layers may further increase the data rate for communications with a UE 115.

Devices of the wireless communications system 100 (e.g., base stations 105 or UEs 115) may have a hardware configuration that supports communications over a particular carrier bandwidth, or may be configurable to support communications over one of a set of carrier bandwidths. In some examples, the wireless communications system 100 may include base stations 105 and/or UEs 115 that support simultaneous communications via carriers associated with more than one different carrier bandwidth.

Wireless communications system 100 may support communication with a UE 115 on multiple cells or carriers, a feature which may be referred to as carrier aggregation or multi-carrier operation. A UE 115 may be configured with multiple downlink component carriers and one or more uplink component carriers according to a carrier aggregation configuration. Carrier aggregation may be used with both FDD and TDD component carriers.

In some cases, wireless communications system 100 may utilize enhanced component carriers (eCCs). An eCC may be characterized by one or more features including wider carrier or frequency channel bandwidth, shorter symbol duration, shorter TTI duration, or modified control channel configuration. In some cases, an eCC may be associated with a carrier aggregation configuration or a dual connectivity configuration (e.g., when multiple serving cells have a suboptimal or non-ideal backhaul link). An eCC may also be configured for use in unlicensed spectrum or shared spectrum (e.g., where more than one operator is allowed to use the spectrum). An eCC characterized by wide carrier bandwidth may include one or more segments that may be utilized by UEs 115 that are not capable of monitoring the whole carrier bandwidth or are otherwise configured to use a limited carrier bandwidth (e.g., to conserve power).

In some cases, an eCC may utilize a different symbol duration than other component carriers, which may include use of a reduced symbol duration as compared with symbol durations of the other component carriers. A shorter symbol duration may be associated with increased spacing between adjacent subcarriers. A device, such as a UE 115 or base station 105, utilizing eCCs may transmit wideband signals (e.g., according to frequency channel or carrier bandwidths of 20, 40, 60, 80 MHz, etc.) at reduced symbol durations (e.g., 16.67 microseconds). A TTI in eCC may include one or multiple symbol periods. In some cases, the TTI duration (that is, the number of symbol periods in a TTI) may be variable.

Wireless communications system 100 may be an NR system that may utilize any combination of licensed, shared, and unlicensed spectrum bands, among others. The flexibility of eCC symbol duration and subcarrier spacing may allow for the use of eCC across multiple spectrums. In some examples, NR shared spectrum may increase spectrum utilization and spectral efficiency, specifically through dynamic vertical (e.g., across the frequency domain) and horizontal (e.g., across the time domain) sharing of resources.

In some cases, a UE 115 may include a communications manager, which may monitor, in conjunction with one or more sensors of the UE 115, thermal and exposure conditions associated with a main communication link between the UE 115 and a base station 105. When the UE 115 detects a thermal or exposure overload condition, the UE 115 may switch from the main communication link to a relay communication link between the UE 115 and a UE configured to operate as a relay UE, enabling the UE 115 to continue communications between the UE 115 and the base station 105 via the relay communication link. The relay communication link may utilize different components (a different transmit chain, for example) than those used with the main communication link and subject to the thermal or exposure overload condition.

In some cases, a base station 105 may include a communications manager, which may establish a first communication link with a first UE 115 and establish a second communication link with a second UE 115 also. In some cases, the base station 105 may receive a message from the first UE 115 that communications between the first UE 115 and the base station 105 are to be relayed by the second UE 115 via the second communication link, where the message may be based at least in part on a thermal overload condition or an exposure condition associated with the first communication link at the first UE.

In some cases, a first UE 115 may act as a relay UE and include a communications manager, which may establish a first communication link with a base station 105. In some cases, first UE 115 may establish a second communication link with a second UE 115. In some cases, the second communication link may be established based at least in part on a thermal overload condition or an exposure condition associated with a third communication link between the second UE 115 and the base station. In some cases, the first UE 115 may relay, over the first communication link and the second communication link, data between the second UE 115 and the base station 105.

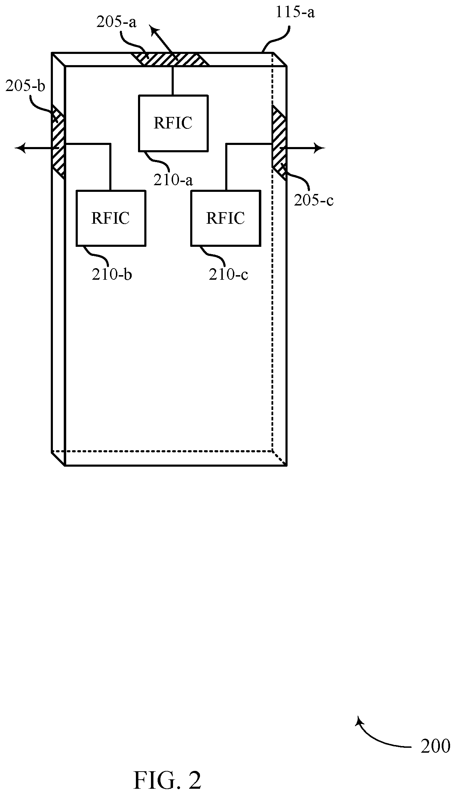

**FIG. 2** illustrates an example of a system 200 wireless communications that supports methods for thermal and MPE mitigation of a wireless communication device in accordance with aspects of the present disclosure. In some examples, system 200 may implement aspects of wireless communication system 100. As shown, system 200 includes UE 115-a, which may be an example of any one of UEs 115 from FIG. 1.

In the illustrated example, UE 115-a may include multiple antenna modules (e.g., first antenna module 205-a, second antenna module 205-b, and third antenna module 205-c). As shown, each antenna module may connect to a radio frequency integrated circuit. In some cases, each antenna module 205 in UE 115-a may be connected to and controlled by an independent radio frequency integrated circuit (RFIC). As shown, first antenna module 205-a may be connected to and controlled by first RFIC 210-a, second antenna module 205-b may be connected to and controlled by second RFIC 210-b, and third antenna module 205-c may be connected to and controlled by third RFIC 210-c. In some cases, each antenna module may be configured to establish a communication link in some direction. For example, first antenna module 205-a may establish a communication link in a first direction, second antenna module 205-b may establish a communication link in a second direction different from the first direction, and third antenna module 205-c may establish a communication link in a third direction different from the first direction and the second direction.

In some cases, the antenna modules 205 of UE 115-a may be configured to operate in a millimeter wave frequency range. In the illustrated example, UE 115-a may be configured with multiple antenna modules 205 (e.g., first antenna module 205-a, second antenna module 205-b, and third antenna module 205-c).

In some cases, RF circuitry such as antenna modules 205 or RFICs 210 may consume higher power at millimeter wave frequencies and as a result may dissipate higher heat. In some cases, use of multiple RFICs (e.g., using RFICs 210 repeatedly and cyclically over short time intervals) in millimeter wave (mmWave) systems may lead to thermal overload or heating up of one or more areas of UE 115-a.

A conventional solution to avoid thermal overload (or one or more areas of UE 115-a heating up) may include at least one of reducing transmit power, reducing EIRP, dropping carriers (e.g., dropping carriers in carrier aggregation, dropping carriers in dual connectivity), reducing rank, deactivating one or more antenna modules 205, switching from a connection on a first antenna module to a connection on a second antenna module (e.g., switching from antenna module 205-a to antenna module 205-b), disabling all millimeter wave frequency communications with UE 115-a, or any combination thereof. However, in some cases, UE 115-a may be unable to switch from a first antenna module to a second antenna module such as when a channel is not sufficiently rich in a direction or directions covered by the second antenna module (e.g., highway settings, interference on second antenna module, suburban or rural settings, etc.). Also, in some cases disabling an antenna module may lead to a reduction in quality of service (e.g., switching from millimeter wave to sub-6 GHz, etc.).

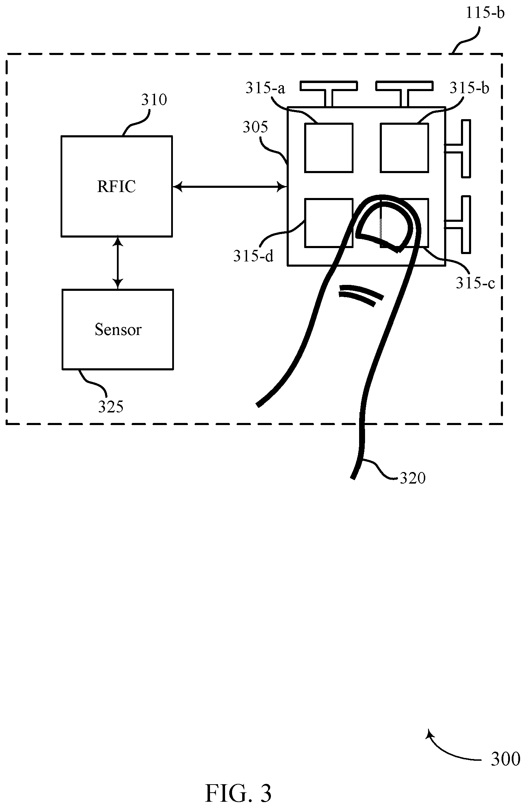

**FIG. 3** illustrates an example of a system 300 for wireless communications that supports methods for thermal and MPE mitigation of a wireless communication device in accordance with aspects of the present disclosure. In some examples, system 300 may implement aspects of wireless communication system 100. As shown, system 300 includes UE 115-b, which may be an example of any one of UEs 115 from FIG. 1 or FIG. 2.

In some examples, UE 115-b may include one or more antenna modules. In some cases, UE 115-b may include at least two antenna modules. As shown, UE 115-b may include antenna module 305 that connects to RFIC 310 and a sensor 325 that connects to RFIC 310. As shown, antenna module 305 may include at least one antenna (e.g., antennas 315). In some cases, antennas 315 may include a patch antenna. In some examples, antenna module 305 may include an array of antennas (e.g., 1x2 sub-array of antennas, 2x2 sub-array of antennas, 2x3 sub-array of antennas, etc.). In the illustrated example, antenna module 305 includes a 2x2 sub-array of antennas that includes antennas 315.

In some cases, UE 115-b may use an RF chain with RFIC 310 and at least one of antennas 315 from antenna module 305 in conjunction with a first communication link. In some cases, UE 115-b may switch between antennas 315 for the first communication link. For example, LTE 115-b may use antenna 315-a, then switch to antenna 315-b, then switch to antenna 315-c, then switch to antenna 315-d, then switch back to antenna 315-a, and so forth. In some cases, UE 115-b may use antenna 315-a and antenna 315-b and then switch to antenna 315-c and antenna 315-d, and then switch back to antenna 315-a and antenna 315-b, and so on. In some cases, UE 115-b may switch an RF chain to a second RFIC (different from RFIC 310) and at least one antenna from a different antenna module (different from antenna module 305) in conjunction with establishing a second communication link and sending/receiving data over the second communication link. In some cases, UE 115-b may switch the RF chain back to RFIC 310 and antenna module 305 to reestablish the first communication link and return to sending/receiving data over the first communication link.

In some cases, RF circuitry such as antenna module 305 or RFIC 310 may consume higher power at millimeter wave frequencies and hence dissipate higher levels of heat than RF circuitry operating at relatively lower carrier frequencies. In some cases, UE 115-b may include multiple RFICs that include RFIC 310. In some cases, each of the multiple RFICs in UE 115-b may be used repeatedly over a given time interval. For example, a first RFIC may be used for a time period, then a second RFIC used for the given time period, then a third RFIC used for the given time period, then the first RFIC used again for the given time period, and so forth, repeating the cycle multiple times. However, using each of the multiple RFICs repeatedly may lead to thermal overload or heating up of one or more areas of UE 115-b. In some cases, using each of the multiple RFICs repeatedly may lead to UE 115-b exceeding a maximum permissible exposure (MPE) constraint. The thermal and exposure constraints may be specified in terms of either short-/medium-term temporal averaging, or local-/medium-spatial averaging of radiated power from UE 115-b. These constraints could correspond to different regulatory requirements across different geographies. In some cases, the thermal and exposure constraints may prevent potentially hazardous operating conditions and ensure the health of a user of UE 115-b as well as reduce electromagnetic pollution or noise/interference from transmissions made by UE 115-b.

In some examples, a head or limb of a user (e.g., finger, thumb, arm, leg) or another part of the user may be situated adjacent to antenna module 305. As shown, a finger 320 of a user of UE 115-b may be adjacent to antenna module 305. In some cases, UE 115-b may detect the presence of finger 320 adjacent to antenna module 305. In some cases, UE 115-b may detect a distance between antenna module 305 and finger 320. In some cases, UE 115-b may use a near-field or beyond near-field approach to detect finger 320. In some cases, UE 115-b may transmit detection signals over unused UL resources to ensure that there is none to negligible UL interference to the associated network. In a conventional system, UE 115- may transmit MPE compliant UL power based on the detected presence of or the detected distance to finger 320. One problem with the conventional system is that transmitting MPE complete UL power may lead to a reduction in quality of service as transmit power or EIRP is reduced.

In some cases, UE 115-b may use antenna module 305 to establish a first communication link with a base station. In some examples, UE 115-b may establish a second communication link between UE 115-b and a second UE based on UE 115-b determining that at least one of a thermal overload condition or an exposure condition associated with antenna module 305 exceeds a corresponding predetermined threshold. For example, UE 115-b may determine that an amount of time finger 320 remains adjacent to antenna module 305 exceeds a time period threshold or that the inverse of a distance (e.g., 1/measured-distance) between antenna module 305 and finger 320 exceeds a distance threshold. In some cases, UE 115-b may determine that heat from antenna module 305 exceeds a given temperature threshold. In some examples, UE 115-b may communicate with the base station over the second communication link (e.g., from UE 115-b to the second UE to the base station, or from the base station to the second UE to UE 115-b). In some cases, the second UE may be configured to operate as a relay UE. In some cases, the second communication link may be for communications between the UE 115-b and a base station via the second communication link.

In some cases, UE 115-b may include one or more sensors (e.g., sensor 325). Although sensor 325 is shown connected to RFIC 310, in some cases sensor 325 may be connected to antenna module 305. Examples of sensor 325 may include thermal sensors to determine a temperature associated with antenna module 305, object detection sensors to detect an object (e.g., finger 320) adjacent to antenna module 305, proximity sensors to determine a distance to an object adjacent to antenna module 305, proximity duration sensors to determine how long an object remains adjacent to antenna module 305. In some cases, sensor 325 may include at least one thermal sensor configured to measure at least one of a UE skin temperature, a core temperature of UE 115-b, a temperature of antenna module 305, a temperature of RFIC 310, or combinations thereof. In some cases, sensor 325 includes at least one exposure sensor configured to measure radio frequency radiation exposure via at least one of local averaging, spatial averaging, temporal averaging, or combinations thereof.

In some cases, UE 115-c may maintain metrics corresponding to subarrays used, RFICs used, or antenna modules used. In some cases, metrics maintained may include thermal levels at each antenna module obtained via one or more sensors (e.g., sensor 325). In some cases, UE 115-c may maintain metrics corresponding to temporal averaging and spatial averaging of exposure in relation to maximum permissible exposure (MPE) constraints. In some cases, UE 115-c may obtain exposure metrics via one or more exposure sensors such as frequency-modulated continuous-wave (FMCW) radar sensors.

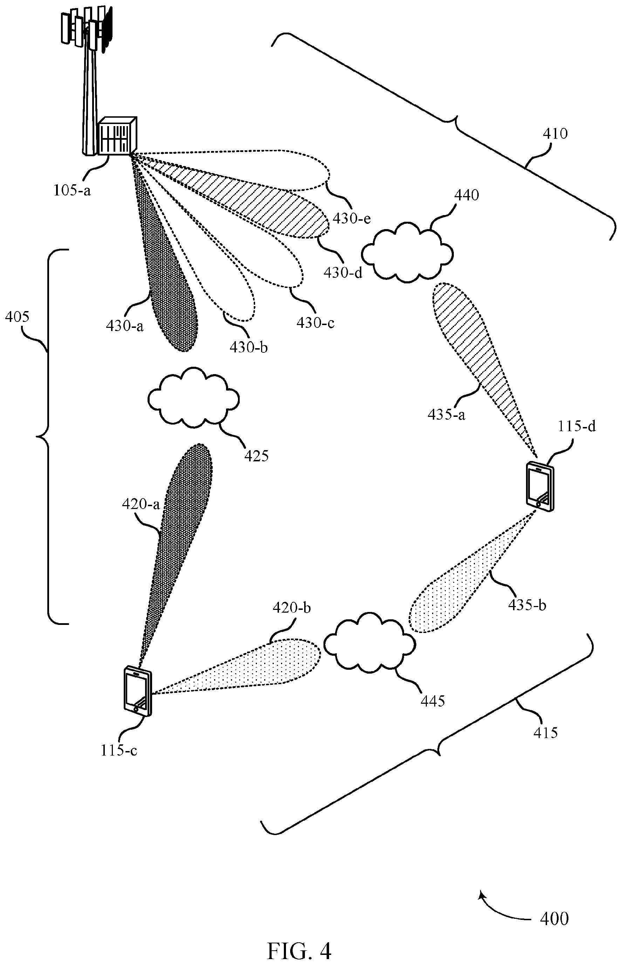

**FIG. 4** illustrates an example of a system 400 for wireless communications that supports methods for thermal and MPE mitigation of a wireless communication device in accordance with aspects of the present disclosure. In some examples, system 400 may implement aspects of wireless communication system 100. As shown, system 400 includes UE 115-c and UE 115-d, which may be examples of any one of UEs 115 from FIG. 1, FIG. 2, or FIG. 3. As shown, system 400 also includes base station 105-a, which may be an example of any one of base stations 105 from FIG. 1.

In the illustrated example, UE 115-c and base station 105-a may establish communication link 405. In some cases, communication link 405 may be a direct communication link between UE 115-c and base station 105-a. In some cases, communication link 405 may be established via beam 420-a from UE 115-c, cluster 425, and beam 430-a from base station 105-a.

In the illustrated example, UE 115-d and base station 105-a may establish communication link 410. In some cases, communication link 410 may be a direct communication link between UE 115-c and base station 105-a. In some cases, communication link 410 may be established via beam 435-a from UE 115-d, cluster 440, and beam 430-d from base station 105-a.

In the illustrated example, UE 115-c and UE 115-d, in conjunction with base station 105-a, may establish relay communication link 415. In some cases, relay communication link 415 may be a relay communication link between UE 115-c and base station 105-a. In some cases, relay communication link 415 may be established via beam 420-b from UE 115-c, cluster 445, and beam 435-b from base station 105-a.

Cluster 425, cluster 440, or cluster 445 may include one or more objects in a channel environment by which a pathway of communications between a transmitter and a receiver may travel. Examples of clusters may include reflecting objects such as lamp posts, foliage, glass windowpanes, metallic objects, outer walls of buildings, cars, buses, other vehicles, etc. The channel environment may be characterized by one or more dominant clusters and a directional beam-based communication may enable the focusing of energy from a transmitter to a receiver via dominant clusters in the channel path.

In one example, UE 115-c may maintain a communication link with base station 105-a or UE 115-d. In some cases, UE 115-c may identify a cluster that provides the strongest communication link (e.g., highest signal strength) between UE 115-c and another network device. For example, UE 115-c may determine that cluster 425 provides the strongest communication link between UE 115-c and base station 105-a. In another example, UE 115-c may determine that cluster 445 provides the strongest communication link between UE 115-c and UE 115-d.

UE 115-c may monitor, via one or more sensors of UE 115-c, at least one of a thermal overload condition or an exposure condition associated with communication link 405 between UE 115-c and base station 105-a. In some cases, UE 115-c may determine, based at least in part on the monitoring, that at least one of the thermal overload condition or the exposure condition exceeds a corresponding predetermined switch threshold. UE 115-c may determine whether there is an alternate path or alternate cluster between base station 105-a and UE 115-c. If UE 115-c determines there is an alternate path/cluster between base station 105-a and UE 115-c, UE 115-c may switch to this alternate path and request base station 105-a to schedule a beam along this alternate path (e.g., different Transmission Configuration Indication (TCI) state request). When UE 115-c determines there is no alternate path of sufficient quality, a reduction in quality of service may result if UE 115-c turns off the RFIC associated with communication link 405 for cool down or exposure mitigation. However, to avoid the reduction in quality of service, UE 115-c may query a relay node database to determine whether a relay communication link may be established to base station 105-a. For example, UE 115-c may query the relay node database to identify one or more relay node UEs with which UE 115-c may establish an alternate communication link to base station 105-a (e.g., via relay communication link 415). In some cases, the relay node database may be stored on at least one of UE 115-c, UE 115-d, or base station 105-a.

In some cases, UE 115-c may select a relay node UE (e.g., UE 115-d) and establish a relay communication link with the selected relay node UE (e.g., relay communication link 415). In some cases, UE 115-c may use a different antenna module/RFIC for the relay communication link (e.g., relay communication link 415) than is used with the direct communication link to base station 105-a (e.g., communication link 405). For example, in relation to establishing an alternate communication link to base station 105-a, UE 115-c may deactivate a first RFIC/antenna module set associated with communication link 405 and activate a second RFIC/antenna module set for relay communication link 415.

In some examples, UE 115-c indicates an identifier of UE 115-d to base station 105-a and requests to use the relay communication link 415 via UE 115-d for communications with base station 105-a. In some cases, UE 115-c may indicate need for assistance to UE 115-d in communications with base station 105-a. In some cases, UE 115-c and UE 115-d may use the relay communication link 415 to complete information exchange with base station 105-a in conjunction with establishing relay communications between UE 115-c and base station 105-a.

Accordingly, after determining that at least one of the thermal overload condition or the exposure condition exceeds the corresponding predetermined switch threshold, UE 115-c may establish relay communication link 415 between UE 115-c and UE 115-d for communications between UE 115-c and base station 105-a via communication link 415. Once established, UE 115-c may transmit data to and receive data from base station 105-a via relay communication link 415. Accordingly, UE 115-c may use relay communication link 415 to average and mitigate thermal/MPE conditions associated with communication link 405.

In some examples, UE 115-c may use a different set of relay node UEs for each instance of thermal and/or MPE exceedance. For example, UE 115-c may establish relay communication link 415 with UE 115-d for a first instance of thermal and/or MPE exceedance, then establish a second relay communication link with another UE (different from UE 115-d) for a second instance of thermal and/or MPE exceedance, and so on. In some cases, UE 115-c may establish relay communication link 415 with UE 115-d for at least one instance of thermal exceedance, but establish a second relay communication link with another UE (different from UE 115-d) for at least one instance of MPE exceedance, and so forth.

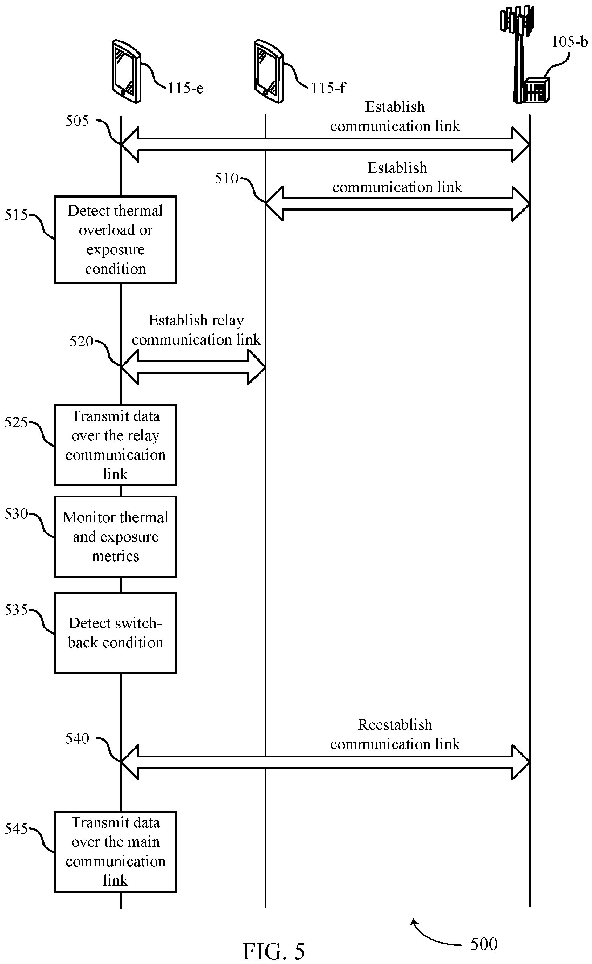

**FIG. 5** illustrates an example of a data flow diagram 500 that supports methods for thermal and MPE mitigation of a wireless communication device in accordance with aspects of the present disclosure. In some examples, diagram 500 may implement aspects of wireless communication system 100. As shown, system 500 includes UE 115-e and UE 115-f, which may be examples of any one of UEs 115 from FIG. 1, FIG. 2, FIG. 3, or FIG. 4. As shown, system 400 also includes base station 105-b, which may be an example of any one of base stations 105 from FIG. 1 or FIG. 4.

At 505, UE 115-e may establish a main communication link between UE 115-e and base station 105-b. At 510, UE 115-f may establish a main communication link between UE 115-f and base station 105-b.

At 515, UE 115-e may detect a thermal overload or exposure condition. For example, UE 115-e may monitor thermal conditions and/or exposure conditions associated with the main communication link of UE 115-e established at 505. At 515, UE 115-e may determine, based on the monitoring, that a thermal condition or exposure condition associated with the main communication link of UE 115-e established at 505 exceeds a predetermined switch threshold.

At 520, UE 115-e may establish a relay communication link between UE 115-e and UE 115-f based on the determination at 515. In some cases, UE 115-e may drop the main communication link of UE 115-e established at 505 before or after establishing the relay communication link at 520.

At 525, UE 115-e may transmit/receive data via the relay communication link. In one example, UE 115-e may transmit data to or receive data from base station 105-b via the relay communication link established at 520 and the main communication link of UE 115-f established at 510.

At 530, UE 115-e may monitor thermal conditions and/or exposure conditions of RF circuitry (e.g., RFIC, antenna module, patch antennas) associated with the main communication link of UE 115-e established at 505. For example, after switching to the relay communication link at 520, UE 115-e may continue to monitor thermal/exposure metrics associated with the main communication link of UE 115-e established at 505.

At 535, UE 115-e may detect a switch-back condition based on a result of the monitoring at 530. In some cases, UE 115-e may determine that the thermal and/or exposure metrics associated with the main communication link of UE 115-e established at 505 have fallen below a predetermined switch-back threshold. In some cases, the predetermined switch-back threshold is below the predetermined switch threshold. For example, the predetermined switch threshold may be triggered when a monitored thermal metric or exposure metric exceeds an exemplary value of 80, while the predetermined switch-back threshold may be triggered when the monitored thermal metric or exposure metric falls below an exemplary value of 20, where the exemplary values of 80 and 20 are of the same unit (e.g., temperature, RF energy, power density, watts per square area of skin tissue, etc.).

At 540, UE 115-e may switch back to or reestablish the main communication link of UE 115-e established at 505 after determining the thermal and/or exposure metrics associated with the main communication link of UE 115-e established at 505 have fallen below the predetermined switch-back threshold. In some cases, UE 115-e may switch back and forth between one or more relay communication links and a main communication link dynamically without human intervention. In some cases, UE 115-e may switch back and forth between one or more relay communication links and a main communication link based on a scheduling pattern. For example, UE 115-e may detect a pattern associated with a main communication link and switch back and forth between one or more relay communication links and the main communication link based on the detected pattern. In one example, UE 115-e may determine that a thermal condition or exposure condition associated with the main communication link of UE 115-e established at 505 exceeds a predetermined switch threshold when UE 115-e is at some location, or when UE 115-e uses the main communication link of UE 115-e established at 505 on a given day or at a given time of day. Accordingly, based on the detected pattern, UE 115-e may generate a scheduling pattern and switch back and forth between one or more relay communication links and the main communication link based on the generated scheduling pattern.

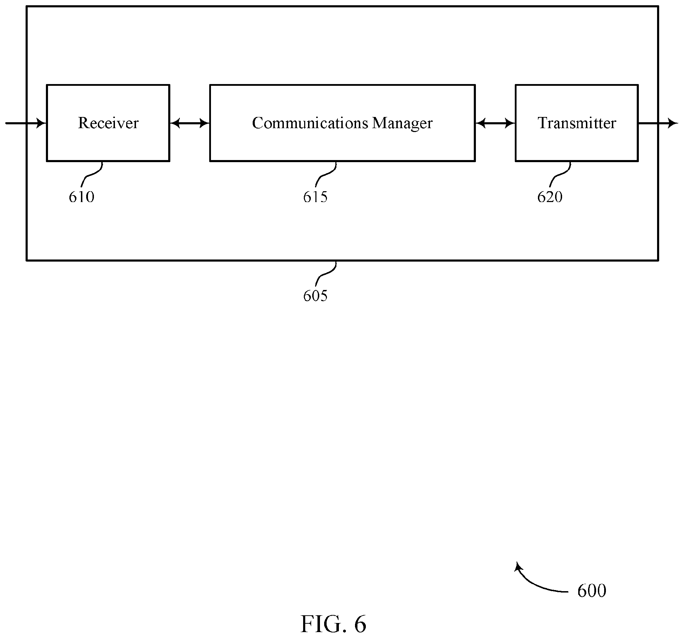

**FIG. 6** shows a block diagram 600 of a device 605 that supports methods for thermal and MPE mitigation of a wireless communication device in accordance with aspects of the present disclosure. The device 605 may be an example of aspects of a UE 115 as described herein. The device 605 may include a receiver 610, a communications manager 615, and a transmitter 620. The device 605 may also include a processor. Each of these components may be in communication with one another (e.g., via one or more buses).

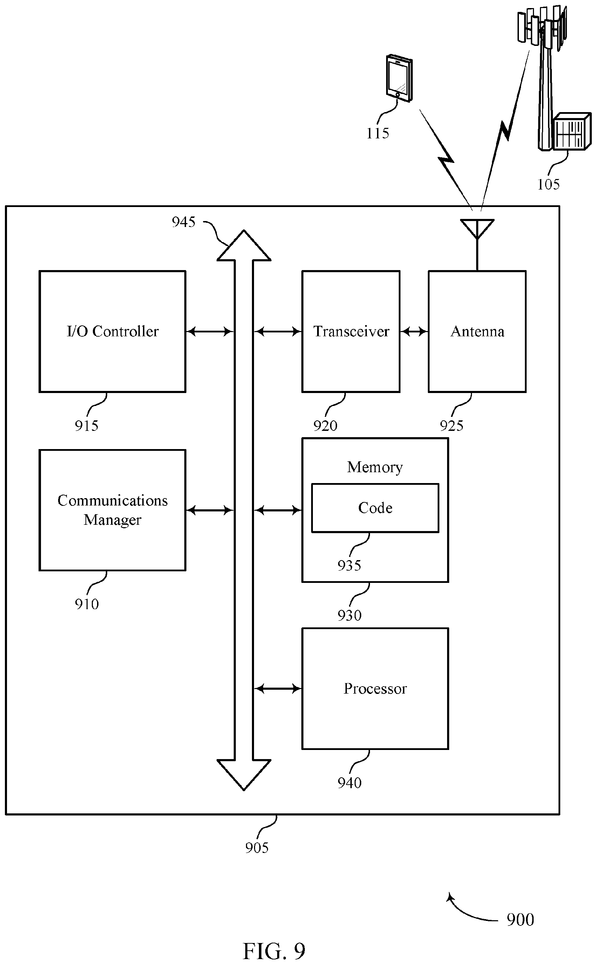

The receiver 610 may receive information such as packets, user data, or control information associated with various information channels (e.g., control channels, data channels, and information related to methods for thermal and MPE mitigation of a wireless communication device, etc.). Information may be passed on to other components of the device 605. The receiver 610 may be an example of aspects of the transceiver 920 described with reference to FIG. 9. The receiver 610 may utilize a single antenna or a set of antennas.

The communications manager 615 may monitor, via one or more sensors of the UE, at least one of a thermal overload condition or an exposure condition associated with a first communication link between the UE and a base station, determine, based on the monitoring, that at least one of the thermal overload condition or the exposure condition exceeds a corresponding predetermined switch threshold, establish, based on the determining, a second communication link between the UE and an additional UE, where the additional UE is configured to operate as a relay UE, for communications between the first UE and the base station via the second communication link, and communicate with the base station via the second communication link based on the determining. In other scenarios, the communications manager 615 may be in a UE that is acting as a relay UE. In these scenarios, the communications manager 615 may also establish a first communication link with a base station, establish a second communication link with a second UE, the second communication link being established based on a thermal overload condition or an exposure condition associated with a third communication link between the second UE and the base station, and relay, over the first communication link and the second communication link, data between the second UE and the base station. The communications manager 615 may be an example of aspects of the communications manager 910 described herein.

The communications manager 615, or its sub-components, may be implemented in hardware, code (e.g., software or firmware) executed by a processor, or any combination thereof. If implemented in code executed by a processor, the functions of the communications manager 615, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 615, or its sub-components, may be physically located at various positions, including being distributed such that portions of functions are implemented at different physical locations by one or more physical components. In some examples, the communications manager 615, or its sub-components, may be a separate and distinct component in accordance with various aspects of the present disclosure. In some examples, the communications manager 615, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 620 may transmit signals generated by other components of the device 605. In some examples, the transmitter 620 may be collocated with a receiver 610 in a transceiver module. For example, the transmitter 620 may be an example of aspects of the transceiver 920 described with reference to FIG. 9. The transmitter 620 may utilize a single antenna or a set of antennas.

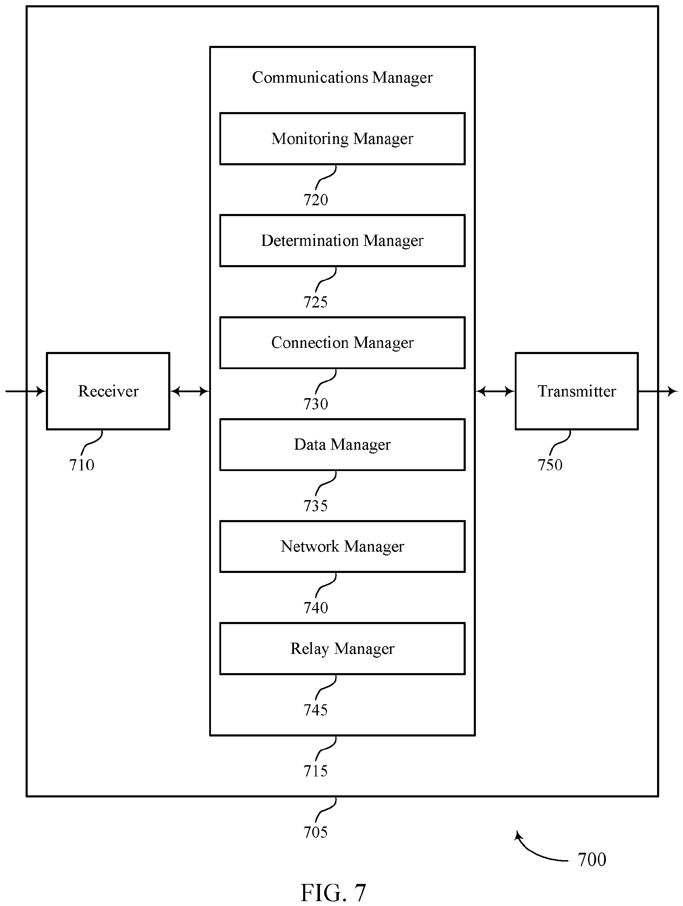

**FIG. 7** shows a block diagram 700 of a device 705 that supports methods for thermal and MPE mitigation of a wireless communication device in accordance with aspects of the present disclosure. The device 705 may be an example of aspects of a device 605, or a UE 115 as described herein. The device 705 may include a receiver 710, a communications manager 715, and a transmitter 750. The device 705 may also include a processor. Each of these components may be in communication with one another (e.g., via one or more buses).

The receiver 710 may receive information such as packets, user data, or control information associated with various information channels (e.g., control channels, data channels, and information related to methods for thermal and MPE mitigation of a wireless communication device, etc.). Information may be passed on to other components of the device 705. The receiver 710 may be an example of aspects of the transceiver 920 described with reference to FIG. 9. The receiver 710 may utilize a single antenna or a set of antennas.

The communications manager 715 may be an example of aspects of the communications manager 615 as described herein. The communications manager 715 may include a monitoring manager 720, a determination manager 725, a connection manager 730, a data manager 735, a network manager 740, and a relay manager 745. The communications manager 715 may be an example of aspects of the communications manager 910 described herein.

The monitoring manager 720 may monitor, via one or more sensors of the first UE, at least one of a thermal overload condition or an exposure condition associated with a first communication link between the first UE and a base station. The determination manager 725 may determine, based on the monitoring, that at least one of the thermal overload condition or the exposure condition exceeds a corresponding predetermined switch threshold.

The connection manager 730 may establish, based on the determining, a second communication link between the first UE and a second UE, where the second UE is configured to operate as a relay UE, for communications between the first UE and the base station via the second communication link. The data manager 735 may communicate with the base station via the second communication link based on the determining.

The network manager 740 may be used when the device 705 is acting as a relay UE for another UE. The network manager 740 may establish a first communication link with a base station and establish a second communication link with a second UE, the second communication link being established based on a thermal overload condition or an exposure condition associated with a third communication link between the second UE and the base station. The relay manager 745 may relay, over the first communication link and the second communication link, data between the second UE and the base station.

The transmitter 750 may transmit signals generated by other components of the device 705. In some examples, the transmitter 750 may be collocated with a receiver 710 in a transceiver module. For example, the transmitter 750 may be an example of aspects of the transceiver 920 described with reference to FIG. 9. The transmitter 750 may utilize a single antenna or a set of antennas.

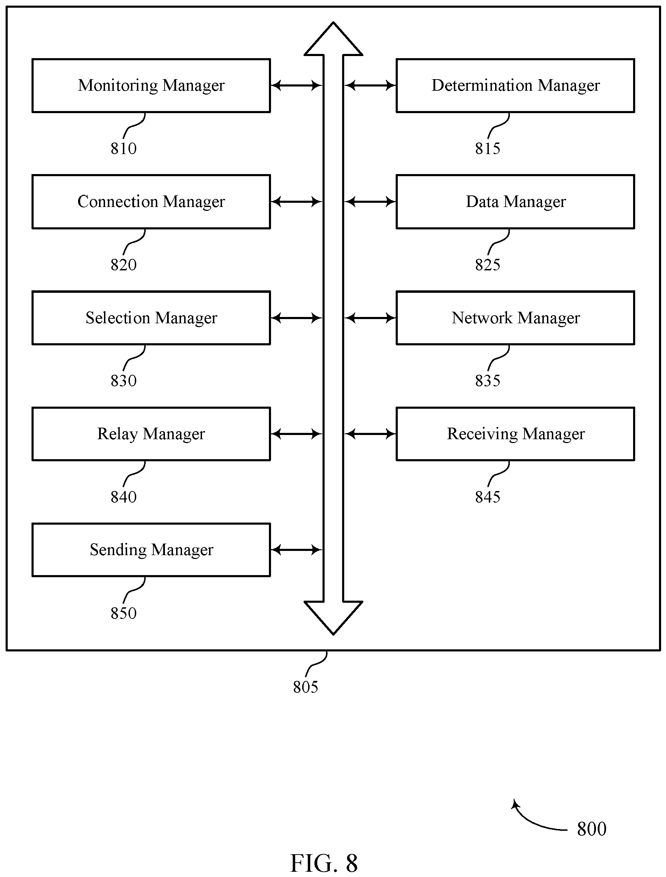

**FIG. 8** shows a block diagram 800 of a communications manager 805 that supports methods for thermal and MPE mitigation of a wireless communication device in accordance with aspects of the present disclosure. The communications manager 805 may be an example of aspects of a communications manager 615, a communications manager 715, or a communications manager 910 described herein. The communications manager 805 may include a monitoring manager 810, a determination manager 815, a connection manager 820, a data manager 825, a selection manager 830, a network manager 835, a relay manager 840, a receiving manager 845, and a sending manager 850. Each of these modules may communicate, directly or indirectly, with one another (e.g., via one or more buses).

The monitoring manager 810 may monitor, via one or more sensors of the first UE, at least one of a thermal overload condition or an exposure condition associated with a first communication link between the first UE and a base station. In some examples, the monitoring manager 810 may continue to monitor at least one of the thermal overload condition or the exposure condition after establishing the second communication link (e.g., beamformed second communication link).

In some cases, the one or more sensors include at least one thermal sensor configured to measure at least one of a UE skin temperature, a core temperature of a user device, a temperature of an antenna module associated with the first communication link, a temperature of a radio frequency integrated circuit associated with the antenna module used to establish the first communication link, or combinations thereof.

In some cases, the one or more sensors include at least one exposure sensor configured to measure radio frequency radiation exposure via at least one of local averaging, spatial averaging, temporal averaging, or combinations thereof. In some cases, the first UE uses a first antenna module for the first communication link and uses a second antenna module different from the first antenna module for the second communication link.

The determination manager 815 may determine, based on the monitoring, that at least one of the thermal overload condition or the exposure condition exceeds a corresponding predetermined switch threshold. In some examples, the determination manager 815 may determine, based at least on the continued monitoring, that the thermal overload condition or the exposure condition that exceeded the predetermined switch threshold has mitigated and is lower than a predetermined operation threshold.

The connection manager 820 may establish, based on the determining, a second communication link between the first UE and a second UE, where the second UE is configured to operate as a relay UE, for communications between the first UE and the base station via the second communication link. In some examples, the connection manager 820 may establish a third communication link between the first UE and a third UE, where the third UE is configured to operates as a second relay UE used for communications between the first UE and the base station via the third communication link instead of via either the first communication link or the second communication link.

In some examples, the connection manager 820 may switch to the third communication link for communications between the first UE and the base station. In some examples, the connection manager 820 may switch back to the first communication link or the second communication link from the third communication link. In some examples, the connection manager 820 may switch back to the first communication link based on the thermal overload condition or the exposure condition that exceeded the predetermined switch threshold being lower than the predetermined operation threshold. In some cases, the communications between the first UE and the base station via the second communication link are security- or privacy-encoded.

The data manager 825 may communicate with the base station via the second communication link based on the determining. In some examples, the data manager 825 may transmit a data forwarding request to the base station via the first communication link, where the data forwarding request is a trigger for the base station to use the second UE as the relay UE for communications between the base station and the first UE.

In some examples, the data manager 825 may transmit a need assistance request to the second UE via a pre-established control channel to the second communication link, where the need assistance request is a trigger for the second UE to be the relay UE for communications between the first UE and the base station. In some examples, the data manager 825 may transmit an identifier of the second UE to the base station via the first communication link.

The network manager 835 may be used when the communications manager 805 is in a UE that is acting as a relay UE for another UE. The network manager 835 may establish a first communication link with a base station. In some examples, the network manager 835 may establish a second communication link with a second UE, the second communication link being established based on a thermal overload condition or an exposure condition associated with a third communication link between the second UE and the base station.

The relay manager 840 (also used when the communications manager 805 is in a UE that is acting as a relay UE for another UE) may relay, over the first communication link and the second communication link, data between the second LTE and the base station. In some examples, the relay manager 840 may relay, via the first communication link and the second communication link, a message from the second UE to the base station, the message including an identifier of the relay UE. In some examples, the relay manager 840 may relay, to the base station via the first communication link and the second communication link, a data forwarding request generated by the second UE, where the data forwarding request is a trigger for the base station to relay communications between the base station and the second UE via the relay UE.

The selection manager 830 may select a second or relay UE from a list of available UEs identified in a database. In some examples, the selection manager 830 may select the second UE from the list of available UEs is based on at least one of a location of the second UE, a proximity of the second UE to the first UE, an antenna module and associated radio frequency integrated circuitry used to control the second communication link by the first UE, a direction of a relay link or a beam-related information associated with establishing the second communication link (e.g., beamformed second communication link), a data size of a payload to communicate via the second UE, a priority associated with the payload, a link budget associated with the second UE, or combinations thereof.

Conversely, the receiving manager 845 may receive a need assistance request from the second UE when the communications manager 805 is in a UE that is acting as a relay UE for another UE. The receiving manager 845 may receive the need assistance request from the second UE via the second communication link (e.g., via a control channel associated with the second communication link), where the need assistance request is a trigger for the relay UE to relay communications between the second UE and the base station. In some examples, the receiving manager 845 may receive an identifier request from the second UE. The sending manager 850 may send an identifier of the relay LTE to the second LTE based on the identifier request.

**FIG. 9** shows a diagram of a system 900 including a device 905 that supports methods for thermal and MPE mitigation of a wireless communication device in accordance with aspects of the present disclosure. The device 905 may be an example of or include the components of device 605, device 705, or a UE 115 as described herein. The device 905 may include components for bi-directional voice and data communications including components for transmitting and receiving communications, including a communications manager 910, an I/O controller 915, a transceiver 920, an antenna 925, memory 930, and a processor 940. These components may be in electronic communication via one or more buses (e.g., bus 945).

The communications manager 910 may monitor, via one or more sensors of the first UE, at least one of a thermal overload condition or an exposure condition associated with a first communication link between the first UE and a base station, determine, based on the monitoring, that at least one of the thermal overload condition or the exposure condition exceeds a corresponding predetermined switch threshold, establish, based on the determining, a second communication link between the first UE and a second UE, where the second UE is configured to operate as a relay UE, for communications between the first UE and the base station via the second communication link, and communicate with the base station via the second communication link based on the determining. The communications manager 910 may also establish a first communication link with a base station, establish a second communication link with a second UE, the second communication link being established based on a thermal overload condition or an exposure condition associated with a third communication link between the second UE and the base station, and relay, over the first communication link and the second communication link, data between the second UE and the base station.

The I/O controller 915 may manage input and output signals for the device 905. The I/O controller 915 may also manage peripherals not integrated into the device 905. In some cases, the I/O controller 915 may represent a physical connection or port to an external peripheral. In some cases, the I/O controller 915 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 915 may represent or interact with a modem, a keyboard, a mouse, a touchscreen, or a similar device. In some cases, the I/O controller 915 may be implemented as part of a processor. In some cases, a user may interact with the device 905 via the I/O controller 915 or via hardware components controlled by the I/O controller 915.

The transceiver 920 may communicate bi-directionally, via one or more antennas, wired, or wireless links as described herein. For example, the transceiver 920 may represent a wireless transceiver and may communicate bi-directionally with another wireless transceiver. The transceiver 920 may also include a modem to modulate the packets and provide the modulated packets to the antennas for transmission, and to demodulate packets received from the antennas.

In some cases, the wireless device may include a single antenna 925. However, in some cases the device may have more than one antenna 925, which may be capable of concurrently transmitting or receiving multiple wireless transmissions.

The memory 930 may include RAM and ROM. The memory 930 may store computer-readable, computer-executable code 935 including instructions that, when executed, cause the processor to perform various functions described herein. In some cases, the memory 930 may contain, among other things, a BIOS which may control basic hardware or software operation such as the interaction with peripheral components or devices.

The processor 940 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 940 may be configured to operate a memory array using a memory controller. In other cases, a memory controller may be integrated into the processor 940. The processor 940 may be configured to execute computer-readable instructions stored in a memory (e.g., the memory 930) to cause the device 905 to perform various functions (e.g., functions or tasks supporting methods for thermal and MPE mitigation of a wireless communication device).

The code 935 may include instructions to implement aspects of the present disclosure, including instructions to support wireless communications. The code 935 may be stored in a non-transitory computer-readable medium such as system memory or other type of memory. In some cases, the code 935 may not be directly executable by the processor 940 but may cause a computer (e.g., when compiled and executed) to perform functions described herein.

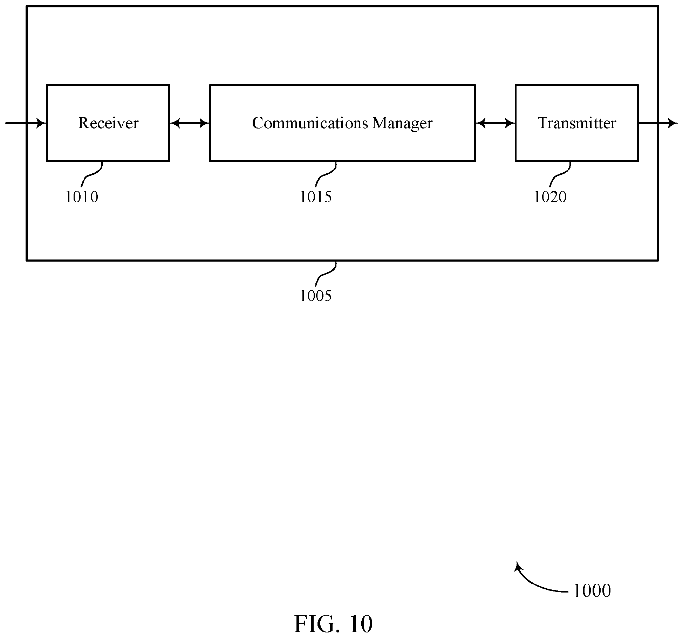

**FIG. 10** shows a block diagram 1000 of a device 1005 that supports methods for thermal and MPE mitigation of a wireless communication device in accordance with aspects of the present disclosure. The device 1005 may be an example of aspects of a base station 105 as described herein. The device 1005 may include a receiver 1010, a communications manager 1015, and a transmitter 1020. The device 1005 may also include a processor. Each of these components may be in communication with one another (e.g., via one or more buses).

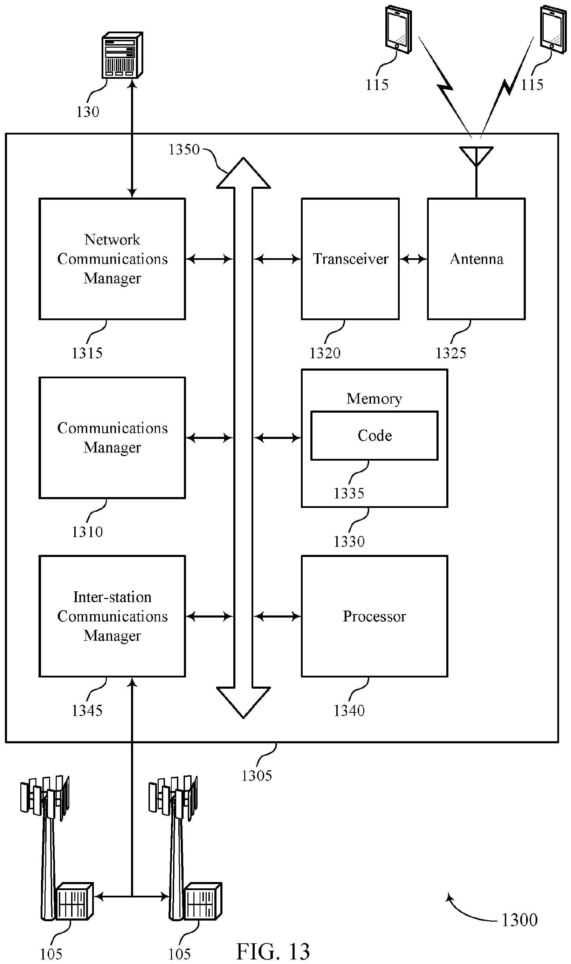

The receiver 1010 may receive information such as packets, user data, or control information associated with various information channels (e.g., control channels, data channels, and information related to methods for thermal and MPE mitigation of a wireless communication device, etc.). Information may be passed on to other components of the device 1005. The receiver 1010 may be an example of aspects of the transceiver 1320 described with reference to FIG. 13. The receiver 1010 may utilize a single antenna or a set of antennas.

The communications manager 1015 may establish a first communication link with a first UE, establish a second communication link with a second UE, and receive a message from the first UE that communications between the first UE and the base station are to be relayed by the second UE via the second communication link, the message being based on a thermal overload condition or an exposure condition associated with the first communication link at the first UE. The communications manager 1015 may be an example of aspects of the communications manager 1310 described herein.

The communications manager 1015, or its sub-components, may be implemented in hardware, code (e.g., software or firmware) executed by a processor, or any combination thereof. If implemented in code executed by a processor, the functions of the communications manager 1015, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 1015, or its sub-components, may be physically located at various positions, including being distributed such that portions of functions are implemented at different physical locations by one or more physical components. In some examples, the communications manager 1015, or its sub-components, may be a separate and distinct component in accordance with various aspects of the present disclosure. In some examples, the communications manager 1015, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 1020 may transmit signals generated by other components of the device 1005. In some examples, the transmitter 1020 may be collocated with a receiver 1010 in a transceiver module. For example, the transmitter 1020 may be an example of aspects of the transceiver 1320 described with reference to FIG. 13. The transmitter 1020 may utilize a single antenna or a set of antennas.

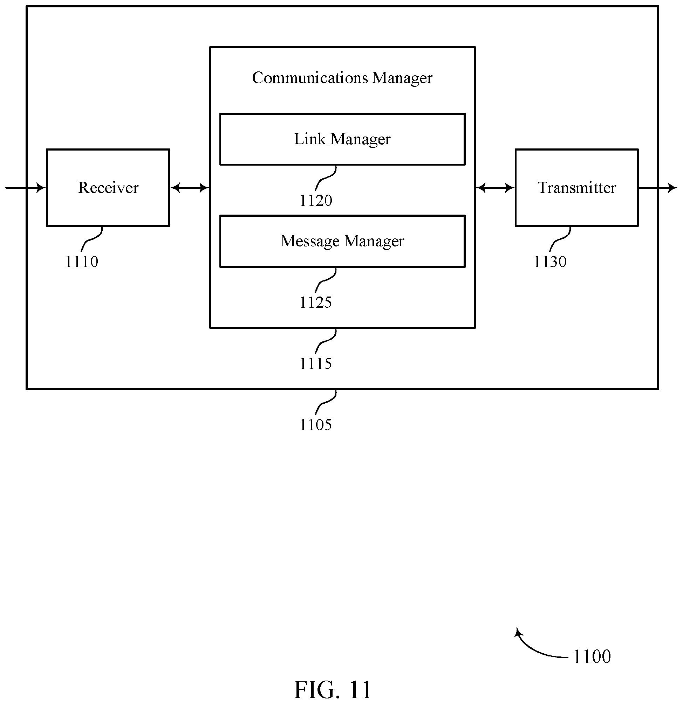

**FIG. 11** shows a block diagram 1100 of a device 1105 that supports methods for thermal and MPE mitigation of a wireless communication device in accordance with aspects of the present disclosure. The device 1105 may be an example of aspects of a device 1005, or a base station 105 as described herein. The device 1105 may include a receiver 1110, a communications manager 1115, and a transmitter 1130. The device 1105 may also include a processor. Each of these components may be in communication with one another (e.g., via one or more buses).

The receiver 1110 may receive information such as packets, user data, or control information associated with various information channels (e.g., control channels, data channels, and information related to methods for thermal and MPE mitigation of a wireless communication device, etc.). Information may be passed on to other components of the device 1105. The receiver 1110 may be an example of aspects of the transceiver 1320 described with reference to FIG. 13. The receiver 1110 may utilize a single antenna or a set of antennas.

The communications manager 1115 may be an example of aspects of the communications manager 1015 as described herein. The communications manager 1115 may include a link manager 1120 and a message manager 1125. The communications manager 1115 may be an example of aspects of the communications manager 1310 described herein.

The link manager 1120 may establish a first communication link with a first UE and establish a second communication link with a second UE.

The message manager 1125 may receive a message from the first UE that communications between the first UE and the base station are to be relayed by the second UE via the second communication link, the message being based on a thermal overload condition or an exposure condition associated with the first communication link at the first UE.

The transmitter 1130 may transmit signals generated by other components of the device 1105. In some examples, the transmitter 1130 may be collocated with a receiver 1110 in a transceiver module. For example, the transmitter 1130 may be an example of aspects of the transceiver 1320 described with reference to FIG. 13. The transmitter 1130 may utilize a single antenna or a set of antennas.

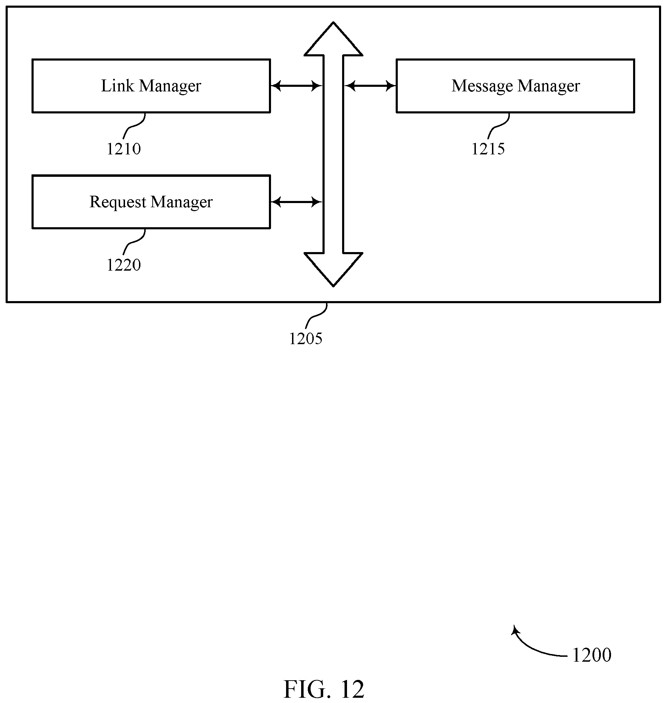

**FIG. 12** shows a block diagram 1200 of a communications manager 1205 that supports methods for thermal and MPE mitigation of a wireless communication device in accordance with aspects of the present disclosure. The communications manager 1205 may be an example of aspects of a communications manager 1015, a communications manager 1115, or a communications manager 1310 described herein. The communications manager 1205 may include a link manager 1210, a message manager 1215, and a request manager 1220. Each of these modules may communicate, directly or indirectly, with one another (e.g., via one or more buses).

The link manager 1210 may establish a first communication link with a first UE. In some examples, the link manager 1210 may establish a second communication link with a second UE. In some examples, the link manager 1210 may establish a third communication link with a third UE.

The message manager 1215 may receive a message from the first UE that communications between the first UE and the base station are to be relayed by the second UE via the second communication link, the message being based on a thermal overload condition or an exposure condition associated with the first communication link at the first UE.

In some examples, the message manager 1215 may receive a message from the first UE that communications between the first UE and the base station are to be relayed by the third UE via the third communication link. In some examples, the message manager 1215 may receive, from the first UE via the first communication link or the second communication link, an identifier of the second UE.

The request manager 1220 may receive a data forwarding request generated by the first UE, where the data forwarding request is a trigger for the base station to use the second UE as a relay UE for communications between the base station and the first UE, and where the first communication link, the second communication link, or both the first communication link and the second communication link include millimeter wave carrier frequencies.

**FIG. 13** shows a diagram of a system 1300 including a device 1305 that supports methods for thermal and MPE mitigation of a wireless communication device in accordance with aspects of the present disclosure. The device 1305 may be an example of or include the components of device 1005, device 1105, or a base station 105 as described herein. The device 1305 may include components for bi-directional voice and data communications including components for transmitting and receiving communications, including a communications manager 1310, a network communications manager 1315, a transceiver 1320, an antenna 1325, memory 1330, a processor 1340, and an inter-station communications manager 1345. These components may be in electronic communication via one or more buses (e.g., bus 1350).

The communications manager 1310 may establish a first communication link with a first UE, establish a second communication link with a second UE, and receive a message from the first UE that communications between the first UE and the base station are to be relayed by the second UE via the second communication link, the message being based on a thermal overload condition or an exposure condition associated with the first communication link at the first UE.

The network communications manager 1315 may manage communications with the core network (e.g., via one or more wired backhaul links). For example, the network communications manager 1315 may manage the transfer of data communications for client devices, such as one or more UEs 115.

The transceiver 1320 may communicate bi-directionally, via one or more antennas, wired, or wireless links as described herein. For example, the transceiver 1320 may represent a wireless transceiver and may communicate bi-directionally with another wireless transceiver. The transceiver 1320 may also include a modem to modulate the packets and provide the modulated packets to the antennas for transmission, and to demodulate packets received from the antennas.

In some cases, the wireless device may include a single antenna 1325. However, in some cases the device may have more than one antenna 1325, which may be capable of concurrently transmitting or receiving multiple wireless transmissions.

The memory 1330 may include RAM, ROM, or a combination thereof. The memory 1330 may store computer-readable code 1335 including instructions that, when executed by a processor (e.g., the processor 1340) cause the device to perform various functions described herein. In some cases, the memory 1330 may contain, among other things, a BIOS which may control basic hardware or software operation such as the interaction with peripheral components or devices.

The processor 1340 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1340 may be configured to operate a memory array using a memory controller. In some cases, a memory controller may be integrated into processor 1340. The processor 1340 may be configured to execute computer-readable instructions stored in a memory (e.g., the memory 1330) to cause the device 1305 to perform various functions (e.g., functions or tasks supporting methods for thermal and MPE mitigation of a wireless communication device).

The inter-station communications manager 1345 may manage communications with other base station 105, and may include a controller or scheduler for controlling communications with UEs 115 in cooperation with other base stations 105. For example, the inter-station communications manager 1345 may coordinate scheduling for transmissions to UEs 115 for various interference mitigation techniques such as beamforming or joint transmission. In some examples, the inter-station communications manager 1345 may provide an X2 interface within an LTE/LTE-A wireless communication network technology to provide communication between base stations 105.

The code 1335 may include instructions to implement aspects of the present disclosure, including instructions to support wireless communications. The code 1335 may be stored in a non-transitory computer-readable medium such as system memory or other type of memory. In some cases, the code 1335 may not be directly executable by the processor 1340 but may cause a computer (e.g., when compiled and executed) to perform functions described herein.

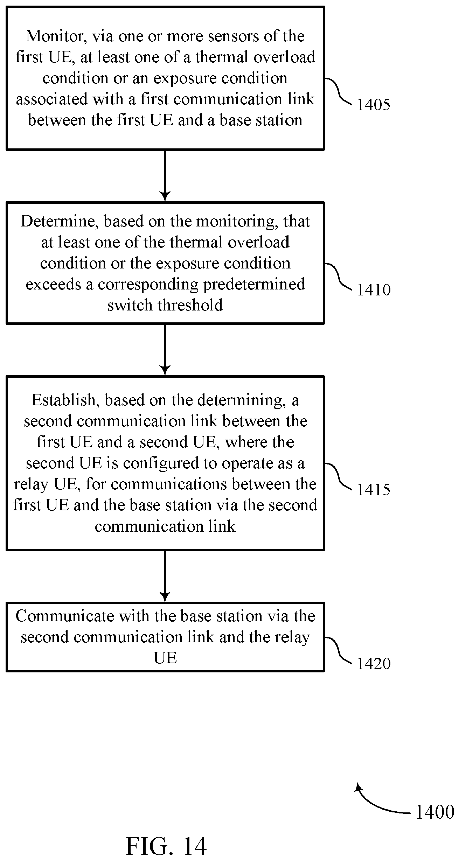

**FIG. 14** shows a flowchart illustrating a method 1400 that supports methods for thermal and MPE mitigation of a wireless communication device in accordance with aspects of the present disclosure. The operations of method 1400 may be implemented by a UE 115 or its components as described herein. For example, the operations of method 1400 may be performed by a communications manager as described with reference to FIGs. 6 through 9. In some examples, a UE may execute a set of instructions to control the functional elements of the UE to perform the functions described herein. Additionally or alternatively, a UE may perform aspects of the functions described herein using special-purpose hardware.

At 1405, the UE may monitor, via one or more sensors of the first UE, at least one of a thermal overload condition or an exposure condition associated with a first communication link between the first UE and a base station. The operations of 1405 may be performed according to the methods described herein. In some examples, aspects of the operations of 1405 may be performed by a monitoring manager as described with reference to FIGs. 6 through 9.

At 1410, the UE may determine, based on the monitoring, that at least one of the thermal overload condition or the exposure condition exceeds a corresponding predetermined switch threshold. The operations of 1410 may be performed according to the methods described herein. In some examples, aspects of the operations of 1410 may be performed by a determination manager as described with reference to FIGs. 6 through 9.

At 1415, the UE may establish, based on the determining, a second communication link between the first UE and a second UE, where the second UE is configured to operate as a relay UE, for communications between the first UE and the base station via the second communication link. The operations of 1415 may be performed according to the methods described herein. In some examples, aspects of the operations of 1415 may be performed by a connection manager as described with reference to FIGs. 6 through 9.

At 1420, the UE may communicate with the base station via the second communication link and the relay UE. The operations of 1420 may be performed according to the methods described herein. In some examples, aspects of the operations of 1420 may be performed by a data manager as described with reference to FIGs. 6 through 9.

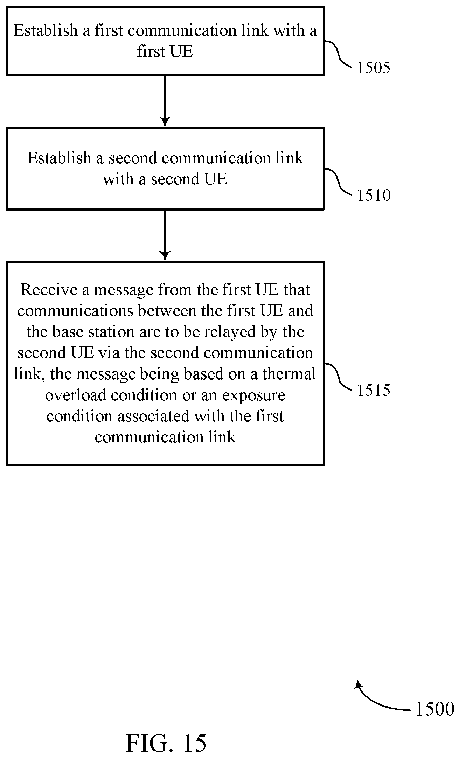

**FIG. 15** shows a flowchart illustrating a method 1500 that supports methods for thermal and MPE mitigation of a wireless communication device in accordance with aspects of the present disclosure. The operations of method 1500 may be implemented by a base station 105 or its components as described herein. For example, the operations of method 1500 may be performed by a communications manager as described with reference to FIGs. 10 through 13. In some examples, a base station may execute a set of instructions to control the functional elements of the base station to perform the functions described herein. Additionally or alternatively, a base station may perform aspects of the functions described herein using special-purpose hardware.

At 1505, the base station may establish a first communication link with a first UE. The operations of 1505 may be performed according to the methods described herein. In some examples, aspects of the operations of 1505 may be performed by a link manager as described with reference to FIGs. 10 through 13.

At 1510, the base station may establish a second communication link with a second UE. The operations of 1510 may be performed according to the methods described herein. In some examples, aspects of the operations of 1510 may be performed by a link manager as described with reference to FIGs. 10 through 13.

At 1515, the base station may receive a message from the first UE that communications between the first UE and the base station are to be relayed by the second UE via the second communication link, the message being based on a thermal overload condition or an exposure condition associated with the first communication link at the first UE. The operations of 1515 may be performed according to the methods described herein. In some examples, aspects of the operations of 1515 may be performed by a message manager as described with reference to FIGs. 10 through 13.

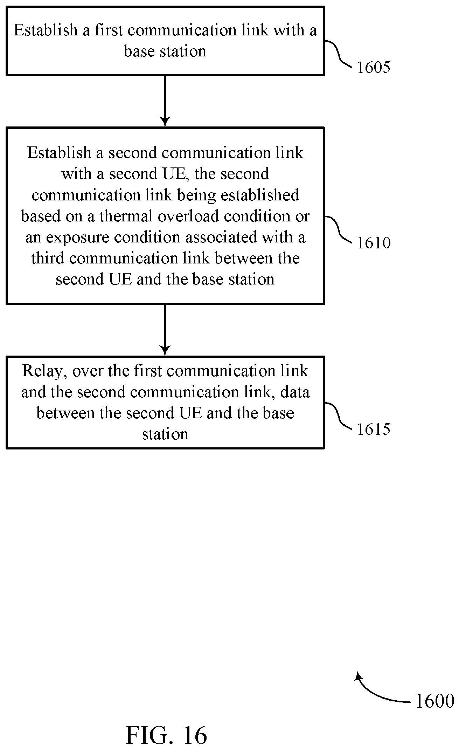

**FIG. 16** shows a flowchart illustrating a method 1600 that supports methods for thermal and MPE mitigation of a wireless communication device in accordance with aspects of the present disclosure. The operations of method 1600 may be implemented by a UE 115 or its components as described herein. For example, the operations of method 1600 may be performed by a communications manager as described with reference to FIGs. 6 through 9. In some examples, a LTE may execute a set of instructions to control the functional elements of the UE to perform the functions described herein. Additionally or alternatively, a UE may perform aspects of the functions described herein using special-purpose hardware.

At 1605, the UE may establish a first communication link with a base station. The operations of 1605 may be performed according to the methods described herein. In some examples, aspects of the operations of 1605 may be performed by a network manager as described with reference to FIGs. 6 through 9.

At 1610, the UE may establish a second communication link with a second UE, the second communication link being established based on a thermal overload condition or an exposure condition associated with a third communication link between the second UE and the base station. The operations of 1610 may be performed according to the methods described herein. In some examples, aspects of the operations of 1610 may be performed by a network manager as described with reference to FIGs. 6 through 9.

At 1615, the UE may relay, over the first communication link and the second communication link, data between the second UE and the base station. The operations of 1615 may be performed according to the methods described herein. In some examples, aspects of the operations of 1615 may be performed by a relay manager as described with reference to FIGs. 6 through 9.

It should be noted that the methods described herein describe possible implementations, and that the operations and the steps may be rearranged or otherwise modified and that other implementations are possible. Further, aspects from two or more of the methods may be combined.

Techniques described herein may be used for various wireless communications systems such as code division multiple access (CDMA), time division multiple access (TDMA), frequency division multiple access (FDMA), orthogonal frequency division multiple access (OFDMA), single carrier frequency division multiple access (SC-FDMA), and other systems. A CDMA system may implement a radio technology such as CDMA2000, Universal Terrestrial Radio Access (UTRA), etc. CDMA2000 covers IS-2000, IS-95, and IS-856 standards. IS-2000 Releases may be commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM).

An OFDMA system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, etc. UTRA and E-UTRA are part of Universal Mobile Telecommunications System (UMTS). LTE, LTE-A, and LTE-A Pro are releases of UMTS that use E-UTRA. UTRA, E-UTRA, UMTS, LTE, LTE-A, LTE-A Pro, NR, and GSM are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned herein as well as other systems and radio technologies. While aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR applications.

A macro cell generally covers a relatively large geographic area (e.g., several kilometers in radius) and may allow unrestricted access by UEs with service subscriptions with the network provider. A small cell may be associated with a lower-powered base station, as compared with a macro cell, and a small cell may operate in the same or different (e.g., licensed, unlicensed, etc.) frequency bands as macro cells. Small cells may include pico cells, femto cells, and micro cells according to various examples. A pico cell, for example, may cover a small geographic area and may allow unrestricted access by UEs with service subscriptions with the network provider. A femto cell may also cover a small geographic area (e.g., a home) and may provide restricted access by UEs having an association with the femto cell (e.g., UEs in a closed subscriber group (CSG), UEs for users in the home, and the like). An eNB for a macro cell may be referred to as a macro eNB. An eNB for a small cell may be referred to as a small cell eNB, a pico eNB, a femto eNB, or a home eNB. An eNB may support one or multiple (e.g., two, three, four, and the like) cells, and may also support communications using one or multiple component carriers.

The wireless communications systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA, or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein can be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media may include random-access memory (RAM), read-only memory (ROM), electrically erasable programmable ROM (EEPROM), flash memory, compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the appended claims.

## Claims

1. A method (1400) for wireless communications by a first user equipment, UE, comprising:
monitoring (1405), via one or more sensors of the first LTE, at least one of a thermal overload condition or an exposure condition associated with a first communication link between the first LTE and a base station;
determining (1410), based at least in part on the monitoring, that at least one of the thermal overload condition or the exposure condition exceeds a corresponding predetermined switch threshold;
**characterized by** establishing (1415), based at least in part on the determining, a second communication link between the first LTE and a second LTE, wherein the second LTE is configured to operate as a relay UE for communications between the first UE and the base station via the second communication link; and
communicating (1420) with the base station via the second communication link and the relay UE;
wherein the first and second communication links are beamforming-based communication links.

2. The method of claim 1, wherein the first communication link, the second communication link, or both the first communication link and the second communication link comprise millimeter wave carrier frequencies, and establishing the second communication link includes:
transmitting a data forwarding request to the base station via the first communication link, wherein the data forwarding request is a trigger for the base station to use the second UE as the relay UE for communications between the base station and the first UE.

3. The method of claim 1, wherein establishing the second communication link includes:
transmitting a need assistance request to the second UE via a pre-established control channel to the second communication link, wherein the need assistance request is a trigger for the second UE to be the relay UE for communications between the first UE and the base station.

4. The method of claim 1, wherein establishing the second communication link includes:
selecting the second UE from a list of available UEs identified in a database; and
transmitting an identifier of the second UE to the base station via the first communication link.

5. The method of claim 4, wherein:
selecting the second UE from the list of available UEs is based at least in part on at least one of a location of the second UE, a proximity of the second UE to the first UE, an antenna module and associated radio frequency integrated circuitry used to control the second communication link by the first UE, a direction of a relay link or a beam-related information associated with establishing the second communication link, a data size of a payload to communicate via the second LTE, a priority associated with the payload, a link budget associated with the second UE, or combinations thereof.

6. The method of claim 1, further comprising:
establishing a third communication link between the first UE and a third UE, wherein the third UE is configured to operate as a second relay UE for communications between the first UE and the base station via the third communication link instead of via either the first communication link or the second communication link; and
switching to the third communication link for communications between the first UE and the base station.

7. The method of claim 6, further comprising:
switching back to the first communication link or the second communication link from the third communication link.

8. The method of claim 1, further comprising:
continuing to monitor at least one of the thermal overload condition or the exposure condition after establishing the second communication link;
determining, based at least on the continued monitoring, that the thermal overload condition or the exposure condition that exceeded the predetermined switch threshold has mitigated and is lower than a predetermined operation threshold; and
switching back to the first communication link based at least in part on the thermal overload condition or the exposure condition that exceeded the predetermined switch threshold being lower than the predetermined operation threshold.

9. The method of claim 1, wherein the one or more sensors include at least one thermal sensor configured to measure at least one of a UE skin temperature, a core temperature of a user device, a temperature of an antenna module associated with the first communication link, a temperature of a radio frequency integrated circuit associated with the antenna module used to establish the first communication link, or combinations thereof.

10. The method of claim 1, wherein the one or more sensors include at least one exposure sensor configured to measure radio frequency radiation exposure via at least one of local averaging, spatial averaging, temporal averaging, or combinations thereof.

11. The method of claim 1, wherein the first UE uses a first antenna module for the first communication link and uses a second antenna module different from the first antenna module for the second communication link.

12. The method of claim 1, wherein the communications between the first UE and the base station via the second communication link are security- or privacy-encoded.

13. An apparatus (605) for wireless communications by a first user equipment, UE, comprising:
means (615) for monitoring, via one or more sensors of the first UE, at least one of a thermal overload condition or an exposure condition associated with a first communication link between the first UE and a base station;
means (615) for determining, based at least in part on the monitoring, that at least one of the thermal overload condition or the exposure condition exceeds a corresponding predetermined switch threshold;
**characterized by** means (615) for establishing, based at least in part on the determining, a second communication link between the first UE and a second UE, wherein the second UE is configured to operate as a relay UE, for communications between the first UE and the base station via the second communication link; and
means (615) for communicating with the base station via the second communication link and the relay UE;
wherein the first and second communication links are beamforming-based communication links.

14. The apparatus of claim 13, wherein the first communication link, the second communication link, or both the first communication link and the second communication link comprise millimeter wave carrier frequencies, and wherein the means for establishing the second communication link include means for transmitting a data forwarding request to the base station via the first communication link, wherein the data forwarding request is a trigger for the base station to use the second LTE as the relay UE for communications between the base station and the first UE.

15. A system for wireless communication comprising:
a first user equipment, UE, comprising an apparatus as claimed in claim 13;
a base station; and
a user equipment operating as a relay UE;
wherein the base station comprises:
means for establishing the first communication link with the first UE;
means for establishing a third communication link with the UE operating as a relay UE; and
means for receiving a message from the first UE that communications between the first UE and the base station are to be relayed by the UE operating as a relay LTE via the third communication link, the message being based at least in part on the thermal overload condition or the exposure condition associated with the first communication link at the first UE; and
the LTE operating as a relay LTE comprising:
means for establishing the third communication link with the base station;
means for establishing the second communication link with the first UE, the second communication link being established based at least in part on the thermal overload condition or the exposure condition associated with the first communication link between the first UE and the base station; and
means for relaying, over the second communication link and the third communication link, data between the first UE and the base station.

## Patentansprüche

1. Ein Verfahren (1400) für drahtlose Kommunikationen durch ein erstes Benutzergerät (User Equipment bzw. UE), aufweisend:
Überwachen (1405), mittels eines oder mehrerer Sensoren des ersten UE, einer Wärmeüberlastungsbedingung oder einer Aussetzungsbedingung, die mit einer ersten Kommunikationsverbindung zwischen dem ersten UE und einer Basisstation assoziiert ist,
Bestimmen (1410), basierend wenigstens teilweise auf dem Überwachen, dass die Wärmeüberlastungsbedingung oder die Aussetzungsbedingung einen entsprechenden vorbestimmten Wechselschwellwert überschreitet,
**gekennzeichnet durch** das Herstellen (1415), basierend wenigstens teilweise auf dem Bestimmen, einer zweiten Kommunikationsverbindung zwischen dem ersten UE und einem zweiten UE, wobei das zweite UE konfiguriert ist für einen Betrieb als ein Relais-UE für Kommunikationen zwischen dem ersten UE und der Basisstation über die zweite Kommunikationsverbindung, und
Kommunizieren (1420) mit der Basisstation über die zweite Kommunikationsverbindung und das Relais-UE,
wobei die ersten und zweiten Kommunikationsverbindungen Strahlformung-basierte Kommunikationsverbindungen sind.

2. Verfahren nach Anspruch 1, wobei die erste Kommunikationsverbindung und/oder die zweite Kommunikationsverbindung Millimeterwellen-Trägerfrequenzen aufweisen und wobei das Herstellen der zweiten Kommunikationsverbindung umfasst:
Senden einer Datenweiterleitungsanfrage an die Basisstation über die erste Kommunikationsverbindung, wobei die Datenweiterleitungsanfrage ein Auslöser für die Basisstation für das Verwenden des zweiten UE als des Relais-UE für Kommunikationen zwischen der Basisstation und dem ersten UE ist.

3. Verfahren nach Anspruch 1, wobei das Herstellen der zweiten Kommunikationsverbindung umfasst:
Senden einer Unterstützungsbedürfnisanfrage an das zweite UE über einen vorgegebenen Steuerkanal an die zweite Kommunikationsverbindung, wobei die Unterstützungsbedürfnisanfrage ein Auslöser für das zweite UE ist, um das Relais-UE für Kommunikationen zwischen dem ersten UE und der Basisstation zu sein.

4. Verfahren nach Anspruch 1, wobei das Herstellen der zweiten Kommunikationsverbindung umfasst:
Auswählen des zweiten UE aus einer Liste von verfügbaren UEs, die in einer Datenbank identifiziert werden, und
Senden einer Kennzeichnung des zweiten UE an die Basisstation über die erste Kommunikationsverbindung.

5. Verfahren nach Anspruch 4, wobei das Auswählen des zweiten UE aus der Liste von verfügbaren UEs wenigstens teilweise auf einer Position des zweiten UE, einer Nähe des zweiten UE zu dem ersten UE, einem Antennenmodul und einem assoziierten integrierten Hochfrequenzschaltungsaufbau, der für das Steuern der zweiten Kommunikationsverbindung durch das erste UE verwendet wird, einer Richtung einer Relaisverbindung oder von strahlbezogenen Informationen, die mit dem Herstellen der zweiten Kommunikationsverbindung assoziiert sind, einer Datengröße einer Nutzlast für das Kommunizieren über das zweite UE, einer mit der Nutzlast assoziierten Priorität, einem mit dem zweiten UE assoziierten Verbindungsbudget und/oder Kombinationen aus diesen basiert.

6. Verfahren nach Anspruch 1, das weiterhin aufweist:
Herstellen einer dritten Kommunikationsverbindung zwischen dem ersten UE und einem dritten UE, wobei das dritte UE konfiguriert ist, um als ein zweites Relais-UE für Kommunikationen zwischen dem ersten UE und der Basisstation über die dritte Kommunikationsverbindung anstatt über entweder die erste Kommunikationsverbindung oder die zweite Kommunikationsverbindung betrieben zu werden, und
Wechseln zu der dritten Kommunikationsverbindung für Kommunikationen zwischen dem ersten UE und der Basisstation.

7. Verfahren nach Anspruch 6, das weiterhin aufweist:
Zurückwechseln von der dritten Kommunikationsverbindung zu der ersten Kommunikationsverbindung oder der zweiten Kommunikationsverbindung.

8. Verfahren nach Anspruch 1, das weiterhin aufweist:
Fortsetzen des Überwachens der Wärmeüberlastungsbedingung oder der Aussetzungsbedingung nach dem Herstellen der zweiten Kommunikationsverbindung,
Bestimmen, basierend wenigstens auf dem fortgesetzten Überwachen, dass sich die Wärmeüberwachungsbedingung oder die Aussetzungsbedingung, die den vorbestimmten Wechselschwellwert überschritten hat, abgeschwächt hat und niedriger als ein vorbestimmter Betriebsschwellwert ist, und
Zurückwechseln zu der ersten Kommunikationsverbindung basierend wenigstens teilweise darauf, dass die Wärmeüberlastungsbedingung oder die Aussetzungsbedingung, die den vorbestimmten Wechselschwellwert überschritten hat, niedriger als der vorbestimmte Betriebsschwellwert ist.

9. Verfahren nach Anspruch 1, wobei der eine oder die mehreren Sensoren wenigstens einen Wärmesensor umfassen, der konfiguriert ist zum Messen wenigstens einer UE-Hauttemperatur, einer Kerntemperatur eines Benutzergeräts, einer Temperatur eines mit der ersten Kommunikationsverbindung assoziierten Antennenmoduls, einer Temperatur einer integrierten Hochfrequenzschaltung, die mit dem für das Herstellen der ersten Kommunikationsverbindung verwendeten Antennenmodul assoziiert ist, und/oder von Kombinationen derselben.

10. Verfahren nach Anspruch 1, wobei der eine oder die mehreren Sensoren wenigstens einen Aussetzungssensor umfassen, der konfiguriert ist zum Messen einer Hochfrequenzstrahlungsaussetzung mittels einer lokalen Mittelung, einer räumlichen Mittelung, einer zeitlichen Mittelung und/oder von Kombinationen derselben.

11. Verfahren nach Anspruch 1, wobei das erste UE ein erstes Antennenmodul für die erste Kommunikationsverbindung verwendet und ein zweites Antennenmodul, das verschieden von dem ersten Antennenmodul ist, für die zweite Kommunikationsverbindung verwendet.

12. Verfahren nach Anspruch 1, wobei die Kommunikationen zwischen dem ersten UE und der Basisstation über die zweite Kommunikationsverbindung Sicherheits- oder Privatsphären-codiert sind.

13. Eine Vorrichtung (605) für drahtlose Kommunikationen durch ein erstes Benutzergerät (User Equipment bzw. UE), aufweisend:
Mittel (615) zum Überwachen, mittels eines oder mehrerer Sensoren des ersten UE, einer Wärmeüberlastungsbedingung oder einer Aussetzungsbedingung, die mit einer ersten Kommunikationsverbindung zwischen dem ersten UE und einer Basisstation assoziiert ist,
Mittel (615) zum Bestimmen, basierend wenigstens teilweise auf dem Überwachen, dass die Wärmeüberlastungsbedingung oder die Aussetzungsbedingung einen entsprechenden vorbestimmten Wechselschwellwert überschreitet,
**gekennzeichnet durch** Mittel (615) zum Herstellen, basierend wenigstens teilweise auf dem Bestimmen, einer zweiten Kommunikationsverbindung zwischen dem ersten UE und einem zweiten UE, wobei das zweite UE konfiguriert ist für einen Betrieb als ein Relais-UE für Kommunikationen zwischen dem ersten UE und der Basisstation über die zweite Kommunikationsverbindung, und
Mittel (615) zum Kommunizieren mit der Basisstation über die zweite Kommunikationsverbindung und das Relais-UE,
wobei die ersten und zweiten Kommunikationsverbindungen Strahlformung-basierte Kommunikationsverbindungen sind.

14. Vorrichtung nach Anspruch 13, wobei die erste Kommunikationsverbindung und/oder die zweite Kommunikationsverbindung Millimeterwellen-Trägerfrequenzen aufweisen und wobei die Mittel zum Herstellen der zweiten Kommunikationsverbindung Mittel zum Senden einer Datenweiterleitungsanfrage an die Basisstation über die erste Kommunikationsverbindung aufweisen, wobei die Datenweiterleitungsanfrage ein Auslöser für die Basisstation für das Verwenden des zweiten UE als des Relais-UE für Kommunikationen zwischen der Basisstation und dem ersten UE ist.

15. Ein System für eine drahtlose Kommunikation, aufweisend:
ein erstes Benutzergerät (User Equipment bzw. UE), das eine Vorrichtung gemäß Anspruch 13 aufweist,
eine Basisstation, und
ein Benutzergerät, das als ein Relais-UE betrieben wird,
wobei die Basisstation aufweist:
Mittel zum Herstellen der ersten Kommunikationsverbindung mit dem ersten UE,
Mittel zum Herstellen einer dritten Kommunikationsverbindung mit dem als ein Relais-UE betriebenen UE, und
Mittel zum Empfangen einer Nachricht von dem ersten UE dazu, dass Kommunikationen zwischen dem ersten UE und der Basisstation durch das als ein Relais-UE betriebene UE über die dritte Kommunikationsverbindung weiterzuleiten sind, wobei die Nachricht wenigstens teilweise auf der Wärmeüberlastungsbedingung oder der Aussetzungsbedingung, die mit der ersten Kommunikationsverbindung an dem ersten UE assoziiert ist, basiert, und
wobei das als ein Relais-UE betriebene UE aufweist:
Mittel zum Herstellen der dritten Kommunikationsverbindung mit der Basisstation,
Mittel zum Herstellen der zweiten Kommunikationsverbindung mit dem ersten UE, wobei die zweite Kommunikationsverbindung basierend wenigstens teilweise auf der Wärmeüberlastungsbedingung oder der Aussetzungsbedingung, die mit der ersten Kommunikationsverbindung zwischen dem ersten UE und der Basisstation assoziiert ist, hergestellt wird, und
Mittel zum Weiterleiten, über die zweite Kommunikationsverbindung und die dritte Kommunikationsverbindung, von Daten zwischen dem ersten UE und der Basisstation.

## Revendications

1. Procédé (1400) de communication sans fil par un premier équipement utilisateur, UE, comprenant les étapes consistant à :
surveiller (1405), via un ou plusieurs capteurs du premier UE, au moins une parmi une condition de surcharge thermique ou une condition d'exposition associée à une première liaison de communication entre le premier UE et une station de base ;
déterminer (1410), sur la base au moins en partie de la surveillance, qu'au moins l'une de la condition de surcharge thermique ou de la condition d'exposition dépasse un seuil de commutation prédéterminé correspondant ;
**caractérisé par** l'établissement (1415), sur la base au moins en partie de la détermination, d'une deuxième liaison de communication entre le premier UE et un deuxième UE, le deuxième UE étant configuré pour fonctionner comme un UE relais pour les communications entre le premier UE et la station de base via la deuxième liaison de communication ; et
communiquer (1420) avec la station de base via la deuxième liaison de communication et l'UE relais ;
dans lequel les première et deuxième liaisons de communication sont des liaisons de communication basées sur la formation de faisceaux.

2. Procédé selon la revendication 1, dans lequel la première liaison de communication, la deuxième liaison de communication, ou à la fois la première liaison de communication et la deuxième liaison de communication comprennent des fréquences porteuses à ondes millimétriques, et l'établissement de la deuxième liaison de communication comprend l'étape consistant à :
transmettre une demande de transfert de données à la station de base via la première liaison de communication, la demande de transfert de données étant un déclencheur permettant à la station de base d'utiliser le deuxième UE en tant qu'UE relais pour des communications entre la station de base et le premier UE.

3. Procédé selon la revendication 1, dans lequel l'établissement de la deuxième liaison de communication comprend l'étape consistant à :
transmettre une demande de besoin d'assistance au deuxième UE via un canal de commande préétabli vers la deuxième liaison de communication, la demande de besoin d'assistance étant un déclencheur permettant au deuxième UE d'être l'UE relais pour les communications entre le premier UE et la station de base.

4. Procédé selon la revendication 1, dans lequel l'établissement de la deuxième liaison de communication comprend l'étape consistant à :
sélectionner le deuxième UE à partir d'une liste d'UE disponibles identifiés dans une base de données ; et
transmettre un identifiant du deuxième UE à la station de base via la première liaison de communication.

5. Procédé selon la revendication 4, dans lequel :
la sélection du deuxième UE dans la liste des UE disponibles est basée au moins en partie sur l'un parmi un emplacement du deuxième UE, une proximité du deuxième UE par rapport au premier UE, un module d'antenne et/ou un circuit intégré radiofréquence associé utilisé pour contrôler la deuxième liaison de communication par le premier UE, une direction d'une liaison relais ou des informations liées au faisceau associées à l'établissement de la deuxième liaison de communication, une taille de données d'une charge utile à communiquer via le deuxième UE, une priorité associée à la charge utile, un bilan de liaison associé au deuxième UE, ou des combinaisons de ceux-ci.

6. Procédé selon la revendication 1, comprenant en outre les étapes consistant à :
établir une troisième liaison de communication entre le premier UE et un troisième UE, le troisième UE étant configuré pour fonctionner comme un deuxième UE relais pour les communications entre le premier UE et la station de base via la troisième liaison de communication au lieu de via la première liaison de communication ou la deuxième liaison de communication ; et
commuter vers la troisième liaison de communication pour les communications entre le premier UE et la station de base.

7. Procédé selon la revendication 6, comprenant en outre l'étape consistant à:
revenir à la première liaison de communication ou à la deuxième liaison de communication à partir de la troisième liaison de communication.

8. Procédé selon la revendication 1, comprenant en outre les étapes consistant à :
continuer à surveiller au moins une parmi la condition de surcharge thermique ou la condition d'exposition après avoir établi la deuxième liaison de communication ;
déterminer, sur la base au moins de la surveillance continue, que la condition de surcharge thermique ou la condition d'exposition qui a dépassé le seuil de commutation prédéterminé s'est atténuée et est inférieure à un seuil de fonctionnement prédéterminé ; et
revenir à la première liaison de communication sur la base au moins en partie du fait que la condition de surcharge thermique ou la condition d'exposition qui a dépassé le seuil de commutation prédéterminé est inférieure au seuil de fonctionnement prédéterminé.

9. Procédé selon la revendication 1, dans lequel le ou les capteurs comprennent au moins un capteur thermique configuré pour mesurer au moins une parmi une température de la peau de l'UE, une température centrale d'un dispositif utilisateur, une température d'un module d'antenne associé à la première liaison de communication, une température d'un circuit intégré radiofréquence associé au module d'antenne utilisé pour établir la première liaison de communication, ou des combinaisons de celles-ci.

10. Procédé selon la revendication 1, dans lequel le ou les capteurs comprennent
au moins un capteur d'exposition configuré pour mesurer l'exposition au rayonnement radiofréquence via au moins l'établissement d'une moyenne locale, l'établissement d'une moyenne spatiale, l'établissement d'une moyenne temporelle ou des combinaisons de celles-ci.

11. Procédé selon la revendication 1, dans lequel le premier UE utilise un premier module d'antenne pour la première liaison de communication et utilise un deuxième module d'antenne différent du premier module d'antenne pour la deuxième liaison de communication.

12. Procédé selon la revendication 1, dans lequel les communications entre le premier UE et la station de base via la deuxième liaison de communication sont codées pour la sécurité ou la confidentialité.

13. Appareil (605) pour communications sans fil par un premier équipement utilisateur, UE, comprenant :
des moyens (615) pour surveiller, via un ou plusieurs capteurs du premier UE, au moins une parmi une condition de surcharge thermique ou une condition d'exposition associée à une première liaison de communication entre le premier UE et une station de base,
des moyens (615) pour déterminer, sur la base au moins en partie de la surveillance, qu'au moins l'une parmi la condition de surcharge thermique et/ou la condition d'exposition dépasse un seuil de commutation prédéterminé correspondant ;
**caractérisé par** des moyens (615) pour établir, sur la base au moins en partie de la détermination, une deuxième liaison de communication entre le premier UE et un deuxième UE, le deuxième UE étant configuré pour fonctionner comme un UE relais, pour des communications entre le premier UE et la station de base via la deuxième liaison de communication ; et
des moyens (615) pour communiquer avec la station de base via la deuxième liaison de communication et l'UE relais ;
dans lequel les première et deuxième liaisons de communication sont des liaisons de communication basées sur la formation de faisceaux.

14. Appareil selon la revendication 13, dans lequel la première liaison de communication, la deuxième liaison de communication, ou à la fois la première liaison de communication et la deuxième liaison de communication, comprennent des fréquences porteuses d'ondes millimétriques, et dans lequel les moyens pour établir la deuxième liaison de communication comprennent des moyens pour transmettre une demande de transfert de données à la station de base via la première liaison de communication, la demande de transfert de données étant un déclencheur permettant à la station de base d'utiliser le deuxième UE comme UE relais pour les communications entre la station de base et le premier UE.

15. Système de communication sans fil comprenant :
un premier équipement utilisateur, UE, comprenant un appareil selon la revendication 13 ;
une station de base ; et
un équipement utilisateur fonctionnant comme un UE relais dans lequel la station de base comprend :
des moyens pour établir la première liaison de communication avec le premier UE ;
des moyens pour établir une troisième liaison de communication avec l'UE fonctionnant comme un UE relais ; et
des moyens pour recevoir un message du premier UE indiquant que les communications entre le premier UE et la station de base doivent être relayées par l'UE fonctionnant comme un UE relais via la troisième liaison de communication, le message étant basé au moins en partie sur la condition de surcharge thermique ou la condition d'exposition associée à la première liaison de communication au niveau du premier UE ; et
l'UE fonctionnant comme un UE relais comprenant :
des moyens pour établir la troisième liaison de communication avec la station de base ;
des moyens pour établir la deuxième liaison de communication avec le premier UE, la deuxième liaison de communication étant établie sur la base au moins en partie de la condition de surcharge thermique ou de la condition d'exposition associée à la première liaison de communication entre le premier UE et la station de base ; et
des moyens pour relayer, sur la deuxième liaison de communication et la troisième liaison de communication, des données entre le premier UE et la station de base.
